# EUROPEAN PATENT SPECIFICATION

(11) **EP 4 171 235 B1**
(45) Date of publication and mention of the grant of the patent: **18.11.2026**
(21) Application number: 21737765.4
(22) Date of filing: 24.06.2021
(51) Int. Cl.: A01P 1/00, A01P 15/00, A01N 43/90

(54) **A METHOD OF DISINFECTING A GASEOUS ENVIRONMENT, A LIQUID, OR A SOLID SURFACE**
VERFAHREN ZUR DESINFEKTION EINER GASFÖRMIGEN UMGEBUNG, EINER FLÜSSIGKEIT ODER EINER FESTEN OBERFLÄCHE
PROCÉDÉ DE DÉSINFECTION D'UN ENVIRONNEMENT GAZEUX, D'UN LIQUIDE OU D'UNE SURFACE SOLIDE

(30) Priority: 24.06.2020 GB 202009637; 26.06.2020 GB 202009788; 03.03.2021 GB 202103000
(43) Date of publication of application: 03.05.2023
(73) Proprietor: Aqdot Limited, Cambridge, CB3 0LE (GB)
(72) Inventor: COULSTON, Roger, Cambridge CB3 0LE (GB); HOWE, Andrew, Cambridge CB3 0LE (GB)
(74) Representative: Stratagem IPM Limited
(86) International application number: PCT/GB2021/051613
(87) International publication number: WO 2021/260386

(56) References cited:
- WO-A1-2018/015465
- QUAN JIA ET AL: "Cucurbit[7]uril as a Broad-Spectrum Antiviral Agent against Diverse RNA Viruses", VIROLOGICA SINICA., 26 May 2021 (2021-05-26), DE, XP055832070, ISSN: 1674-0769, Retrieved from the Internet <URL:https://link.springer.com/article/10.1007/s12250-021-00404-9/fulltext.html> [retrieved on 20210813], DOI: 10.1007/s12250-021-00404-9

## Description

This invention relates to a non-therapeutic method of disinfecting or preventing infection of a gaseous environment by, a liquid of, or a solid surface of one of an enveloped virus, a non-enveloped virus, or a mixture thereof.

There is a perennial need to control the spread of viruses by disinfecting or preventing infection of gaseous environments, liquids, or solid surfaces at ambient temperature, for example whilst room temperature is typically 18-25, or 18-23 degrees Celsius, it can range from 5-50, 10-45, 15-40 degrees Celsius.

Ambient temperature benefiting from the body heat of a mammal, for example a human being, is nearer mammal body temperature and can be in the range, for example, of 20-37, 25-37, 30-37 degrees Celsius.

Effective compositions tend to be cytotoxic and are thus not easy to handle (often requiring use of protective gear) or suitable for use on or in more delicate environments such as on human mucous membranes.

WO 2018/015465 (Ecole Poly technique Federale de Lausanne (EPFL)) relates to virucidal compounds and uses thereof in treatment of viral infections, for sterilizationand for disinfection. The compounds are sulfonylalkylcyclodextrins.

It has been observed that cucurbituril isomers are effective at preventing infection of cells by a variety of enveloped and non-enveloped viruses without accompanying cytotoxicity.

### Summary of the invention

In a first aspect of the invention, a non-therapeutic method of disinfecting or preventing infection of a gaseous environment by, a liquid of, or a solid surface of one of an enveloped virus, a non-enveloped virus, or a mixture thereof is provided, the method comprising the step of treating said gaseous environment, liquid, or solid surface with a composition comprising an effective amount of a cucurbituril isomer selected from any one of cucurbit[6]uril, cucurbit[7]uril, cucurbit[8]uril, and mixtures thereof or, for preventing infection of a solid surface, comprising the step of producing said solid surface from a composition comprising an effective amount of a cucurbituril isomer selected from any one of cucurbit[6]uril, cucurbit[7]uril, cucurbit[8]uril, and mixtures thereof.

In a second aspect of the invention, a composition comprising an effective amount of a cucurbituril isomer selected from any one of cucurbit[6]uril, cucurbit[7]uril, cucurbit[8]uril, and mixtures thereof for use in a therapeutic method of disinfecting or preventing infection of a solid surface of one of an enveloped virus, a non-enveloped virus, or a mixture thereof is provided, wherein the solid surface is a human mucous membrane such as found in nasal passages or eyes.

The terms "disinfecting" and "preventing infection" in the context of the invention means that the virus is at least partially inactivated without necessarily leading to destruction of the virus or build-up of active virus. Thus at least 10, 20, 30, 40, 50, 60, 70, 80, 90 % of the virus virions are inactivated on disinfection.

By the terms "gaseous environment, a liquid, or a solid surface" is meant gaseous environment, a liquid, or a solid surface at ambient temperature, for example at room temperature the temperature is typically 18-25, or 18-23 degrees Celsius, although it can range from 5-50, 10-45, 15-40 degrees Celsius.

Ambient temperature benefiting from the body heat of a mammal, for example a human being, is nearer mammal body temperature and can be in the range, for example, of 20-37, 25-37, 30-37 degrees Celsius.

An enveloped virus is a virus with a viral envelope as an outermost layer which provides protection for the genetic material of the virus when traveling between host cells. Not all viruses have envelopes. The envelopes are typically derived from portions of the host cell membranes (phospholipids and proteins), but include some viral glycoproteins. Glycoproteins on the surface of the envelope serve to identify and bind to receptor sites on the host's membrane. The viral envelope then fuses with the host's membrane, allowing the capsid and viral genome to enter and infect the host.

In a non-enveloped virus the genetic material of the virus is protected by the protein capsid, and detector proteins serve to identify and bind to receptor sites on the host cell membrane.

Non-enveloped viruses typically have higher resistance to disinfection than enveloped viruses because the envelopes are more susceptible to disruption.

Whilst not being bound by theory, it is thought that the cucurbituril isomers complex with the surface of virus virions blocking their ability to bind to the specific receptors on the host cellular surface.

### Brief description of the figures

The invention is now described in more detail with reference to:
Figures 1a to 1g which show the % cell infection versus sample dilution for each of samples C1 to C4 and C6 to C8 which comprise different cucurbituril isomers at varying concentrations in different aqueous media;
Figures 2a to 2d which show the results of the % cell infection versus sample dilution for samples D1, D2 and D4 to D8 which comprise different cucurbituril isomers at varying concentrations in different aqueous media; and
Figures 3a to 3c which show the TCID⁵⁰ results of the effects of cucurbiturils on (a) herpes simplex virus serotype 2 (HSV-2) (n = 3), (b) respiratory syncytial virus (RSV) (n = 2), and (c) SARS-CoV-2 (n = 1) (dotted lines indicate limits of detection; and error bars indicate standard deviation);
Figures 4a and 4b which show the results of a dose response assay against (a) herpes simplex virus serotype 2 (HSV-2) (n = 2), and (b) respiratory syncytial virus (RSV) (n = 1 for AqFresh ^{RTM} and n = 2 for cucurbit[7]uril) (error bars indicate standard deviation);
Figure 5 which shows virucidal assay data for herpes simplex virus serotype 2 (HSV-2) showing a 2-log reduction in viral titre with cucurbit[7]uril indicating cucurbit[7]uril acts virucidally (n = 3; error bars indicate standard deviation);
Figure 6 which shows the results of a DNA-exposure assay illustrating that cucurbit[7]uril and AqFresh ^{RTM} are associated with release of DNA from herpes simplex virus serotype 2 (HSV-2); and
Figure 7 which shows the results of a time of addition study suggesting that cucurbit[7]uril only inhibits herpes simplex virus serotype 2 (HSV-2) titre when added simultaneously with the virus to cells, and not when added before or after viral exposure (n = 2; dotted lines indicate limits of detection).

### Detailed description of the invention

In a first aspect of the invention, a non-therapeutic method of disinfecting or preventing infection of a gaseous environment by, a liquid of, or a solid surface of one of an enveloped virus, a non-enveloped virus, or a mixture thereof is provided, the method comprising the step of treating said gaseous environment, liquid, or solid surface with a composition comprising an effective amount of a cucurbituril isomer selected from any one of cucurbit[6]uril, cucurbit[7]uril, cucurbit[8]uril, and mixtures thereof or, for preventing infection of a solid surface, comprising the step of producing said solid surface from a composition comprising an effective amount of a cucurbituril isomer selected from any one of cucurbit[6]uril, cucurbit[7]uril, cucurbit[8]uril, and mixtures thereof.

Cucurbit[8]uril (CB[8]; CAS 259886-51-6) is a barrel shaped container molecule which has eight repeat glycoluril units and an internal cavity size of 479 A³ (see structure below). CB[8] is readily synthesised using standard techniques and is available commercially (e.g. Sigma-Aldrich, MO USA).

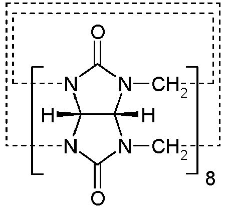

Other cucurbituril isomers are formed from different numbers of glycoluril numbers.

A variant of CB[8] may include a structure having one or more repeat units that are structurally analogous to glycoluril. The repeat unit may include an ethylurea unit. Where all the units are ethylurea units, the variant is a hemicucurbituril. The variant may be a hemicucurbit[12]uril as shown below:

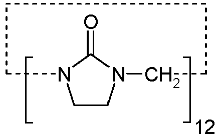

A derivative of a cucurbituril is a structure having one, two, three, four or more substituted glycoluril units. A substituted cucurbituril compound may be represented by the structure below: 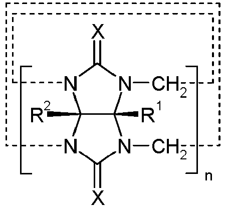 wherein:
n is an integer of at least 5;
and for each glycoluril unit each X is O, S or NR³, and
-R¹ and -R² are each independently selected from -H and the following optionally substituted groups: -R³, -OH, -OR³, --COOR³, -NH₂, -NHR³ and -N(R³)₂, a phosphorus oxoacid substituent, a sulphur oxoacid substituent, a carboxylic acid substituent where -R³ is independently selected from C₁₋₂₀alkyl, C₆₋₂₀carboaryl, and C₅₋₂₀heteroaryl, or where -R¹ and/or -R² is -N(R³)₂, both -R³ together form a C₅₋₇ heterocyclic ring; or
together -R¹ and -R² are C₄₋₆alkylene forming a C₆₋₈carbocyclic ring together with the uracil frame.

One of the glycoluril units may be a substituted glycoluril unit. Thus, -R¹ and -R² are each independently -H for n-1 of the glycoluril units.

Each X may be O. Alternatively, each X is S.

Examples of phosphorus oxoacids include phosphinic acid, phosphonic acid, hypophosphoric acid, orthophosphoric acid, oligophosphoric acids, polyphosphoric acids, peroxomonophosphoric acid, isohypophosphoric acid, and mixed oxidation state phosphorus oxoacids.

Examples of sulphur oxoacids include sulphuric acid, polysulfuric acids, peroxymonosulfuric acid, peroxydisulfuric acid, dithionic acid, thiosulfuric acid, disulfurous acid, sulfurous acid, dithionous acid, sulfoxylic acid, polythionic acid, thiosulfurous acid, and dihydroxydisulfane.

Examples of carboxylic acids include straight and branched chain saturated carboxylic acids such as formic acid, unsaturated monocarboxylic acids (such as acrylic acid), fatty acids, amino acids, keto acids, aromatic carboxylic acids, polycarboxylic acids such as dicarboxylic and tricarboxylic acids, alpha hydroxy acids, divinylether fatty acids.
- R¹ and -R² may be each independently -H.

For each unit one of -R¹ and -R² may be H and the other independently selected from -H and the following optionally substituted groups: -R³, -OH, -OR³, -COOH, -COOR³, -NH₂, -NHR³ and -N(R³)₂. For one unit one of -R¹ and -R² may be -H and the other independently selected from -H and the following optionally substituted groups: -R³, -OH, -OR³, -COOH, -COOR³, -NH₂, -NHR³ and -N(R³)₂. The remaining glycoluril units are such that -R¹ and -R² are each independently H.

Preferably -R³ is C₁₋₂₀alkyl, most preferably C₁₋₆alkyl. The C₁₋₂₀alkyl group may be linear and/or saturated. Each group -R³ may be independently unsubstituted or substituted. Preferred substituents are selected from: -R⁴, -OH, -OR⁴, -SH, -SR⁴, -COOH, -COOR⁴, -NH₂, -NHR⁴ and -N(R⁴)₂, wherein -R⁴ is selected from C₁₋₂₀alkyl, C₆₋₂₀carboaryl, and C₅₋₂₀heteroaryl. The substituents may be independently selected from -COOH and -COOR⁴.

Sometimes, -R⁴ is not the same as -R³. Sometimes, -R⁴ is preferably unsubstituted.

Where -R¹ and/or -R² is -OR³, -NHR³ or -N(R³)₂, then -R³ is preferably C₁₋₆alkyl. Sometimes, -R³ is substituted with a substituent -OR⁴, -NHR⁴ or -N(R⁴)₂, wherein each -R⁴ is C₁₋₆alkyl and is itself preferably substituted.

Preferably the enveloped virus is selected from the group consisting of family Herpesviridae, Poxviridae, Hepadnaviridae, Asfarviridae, Flaviviridae, Togaviridae, Coronaviridae, Orthomyxoviridae, Paramyxoviridae, Rhabdoviridae, Bunyavirales, Filoviridae, Pneumoviridae, and Retroviridae.

The enveloped virus may be selected from the group consisting of genus simplexvirus, varicellovirus, orthopoxvirus, parapoxvirus, yatapoxvirus, molluscipoxvirus, orthohepadnavirus, hepacivirus, flavivirus, betacoronavirus, alphacoronavirus, deltacoronavirus, gammacoronavirus, alphainfluenzavirus, betainfluenzavirus, gammainfluenzavirus, morbillivirus, rubelavirus, lyssavirus, ebolavirus, orthopneumovirus, cytomegalovirus, and lentivirus.

More specifically the enveloped virus may be selected from the group consisting of species herpes simplex virus 1, herpes simplex virus 2, varicella zoster virus, modified vaccinia virus Ankara (MVA), hepatitis B virus, hepatitis C virus, West Nile virus, dengue virus, tick-borne encephalitis virus, yellow fever virus, Zika virus, Middle East respiratory syndrome-related coronavirus, Severe acute respiratory syndrome-related coronavirus such as SARS-CoV, SARS-CoV-2 and feline coronavirus (Strain Munich), influenza A virus, influenza B virus, influenza C virus, measles virus, mumps virus, rabies virus, ebola virus, respiratory syncytial virus, cytomegalovirus, HIV-1 virus and HIV-2 virus.

Preferably the non-enveloped virus is selected from the group consisting of family Picornaviridae, Caliciviridae, Adenoviridae, Reoviridae, Astroviridae, Circoviridae, Parvoviridae, Papillomaviridae and Polyomaviridae.

The non-enveloped virus may be selected from the group consisting of genus enterovirus, rotavirus, norovirus, vesivirus, mastadenovirus, mamastrovirus, cyclovirus, protoparvovirus, alphapolyomavirus, betapolyomavirus, and gammapolyomavirus.

More specifically the non-enveloped virus may be selected from the group consisting of species enterovirus A, enterovirus B, enterovirus C, coxsackievirus B4, poliovirus type 1, murine norovirus, feline calicivirus, rhinovirus A, rhinovirus B, rhinovirus C, Norwalk virus, Adenovirus type 5, and any one of rotavirus A to J.

Thus the composition may comprise cucurbit[8]uril, optionally the composition additionally comprises cucurbit[6]uril and cucurbit[7]uril. Cucurbit[6]uril and cucurbit[7]uril are formed from respectively 6 and 7 glycoluril units.

The composition optionally additionally comprises phenoxyethanol. Phenoxyethanol is known to be effective against gram-negative and gram-positive bacteria, and the yeast Candida albicans, but was not observed to be cytotoxic in the examples described below.

More generally, the composition may additionally comprises a virucide, optionally wherein the virucide is selected from the group consisting of phenoxyethanol, alcohols such as isopropyl alcohol, ethanol and n-propanol, chlorine based bleach, peroxide-based bleach, an aldehyde such as formaldehyde, glutaraldehyde or ortho-phthalaldehyde, a quaternary ammonium compound such as benalkonium chloride or didecyldimethyl ammonium chloride, a chlorhexidine such as chlorhexidine digluconate, and an iodophor.

In one embodiment of the invention, the composition excludes other cucurbituril isomers except cucurbit[7]uril.

In another embodiment of the invention, the composition excludes other cucurbituril isomers except cucurbit[8]uril, and wherein the weight ratio between phenoxyethanol and cucurbit[8]uril may be less than 9:1, preferably less than 5, most preferably less than 3.

When the composition comprises a mixture of cucurbit[6]uril, cucurbit[7]uril and cucurbit[8]uril, the weight ratio between phenoxyethanol and cucurbit[8]uril may be more than 5:1, preferably greater than 7:1, most preferably greater than 9:1.

The effective amount of the cucurbituril isomer selected from any one of cucurbit[6]uril, cucurbit[7]uril, cucurbit[8]uril, and mixtures thereof may be in the range 0.000005-5, 0.00005-2, 0.0005-1, 0.005-1, 0.05-1 % w/v.

In one embodiment of the invention, when the composition comprises a mixture of cucurbit[6]uril, cucurbit[7]uril and cucurbit[8]uril, cucurbit[8]uril comprises 10-30, preferably 15-25 % w/w total cucurbiturils, wherein the term "cucurbiturils" means cucurbituril isomers.

Optionally, when the composition comprises a mixture of cucurbit[6]uril, cucurbit[7]uril and cucurbit[8]uril, cucurbituril other than cucurbit[6]uril, cucurbit[7]uril and cucurbit[8]uril comprises less than 5, less than 1, less than 0.5 % w/w total cucurbiturils, optionally wherein cucurbituril other than cucurbit[6]uril, cucurbit[7]uril and cucurbit[8]uril comprises at least 0.001 or at least 0.01 % w/w total cucurbiturils, wherein cucurbituril other than cucurbit[6]uril, cucurbit[7]uril and cucurbit[8]uril is preferably selected from the group consisting of cucurbit[5]uril, any one of cucurbit[9]uril to cucurbit[20]uril, and a mixture thereof.

More generally, when cucurbit[5]uril is present in the composition, its concentration may be from about 0.01 to about 99, from about 0.01 to about 75, from about 0.01 to about 50, from about 0.1 to about 30, from about 0.1 to about 20, from about 0.1 to about 10, from about 0.1 to about 5, from about 0.1 to about 2, from about 0.1 to about 1, from about 0.1 to about 0.5 % w/w total cucurbiturils in the composition. In one embodiment the composition is substantially free of cucurbit[5]uril. By "substantially free" is meant less than 0.01 or less than 0.001 % w/w total cucurbiturils.

More generally, when cucurbit[6]uril is present in the composition, its concentration may be from about 0.1 to about 99, from about 1 to about 75, from about 5 to about 60, from about 20 to about 60, from about 35 to about 60, from about 45 to about 60 % w/w total cucurbiturils in the composition.

More generally, when cucurbit[7]uril is present in the composition, its concentration may be from about 0.1 to 99, from about 5 to about 75, from about 10 to about 60, from about 20 to about 45 w/w total cucurbiturils in the composition. In one embodiment, the concentration of cucurbit[7]uril is less than 45 % w/w total cucurbiturils in the composition.

More generally, when cucurbit[8]uril is present in the composition, its concentration may be from about 0.1 to about 99.999, about 0.1 to about 99.99 from about 0.1 to about 99, from about 1 to about 98, from about 1 to about 97, from about 1 to about 96, from about 1 to about 95, from about 1 to about 75, from about 1 to about 50, from about 5 to about 40, from about 10 to about 30, from about 15 to about 25 % w/w total weight cucurbiturils in the composition.

In one embodiment, the composition comprises from about 45 to about 60 % by weight cucurbit[6]uril, 20 to about 45 % by weight cucurbit[7]uril, and from about 15 to about 25 % by weight cucurbit[8]uril, and less than 1 % by weight of cucurbit[9]uril and higher cucurbiturils, based on the total weight of total cucurbiturils in the composition.

A cucurbituril isomer may be covalently linked to another cucurbituril isomer via a linker group that is a substituent at position R¹ or R² at one of the glycoluril units in the cucurbit[8]uril structure or represented in the structure shown above or other cucurbituril isomer. There are no particular limitations on the covalent link between the cucurbituril isomers. The cucurbituril isomers may be pendant to a polymer.

The composition may comprise a carrier and additional excipients which depends on whether the composition is for disinfecting or for preventing infection of a gaseous environment, or a liquid, or a solid surface, or is for preventing infection of a solid surface by producing said solid surface comprising the composition. Thus the composition may comprise thickener, pigments (such as titanium dioxide or iron oxides) and/or extender pigments (such as talc, mica or diatomaceous earth), ultra-violet light absorbers (such as benzophenone) or scatterers (such as micronized titanium dioxide), buffers, sequestrants, and anti-microbial agents. The carrier may be aqueous, non-aqueous, or an emulsion, but is preferably aqueous.

The composition is optionally in the form of a solution or liquid suspension, optionally suitable for dispensing as an aerosol or spray, or in the form of a liquid coating and the step of treating the solid surface is coating the solid surface with the liquid composition.

The solid surface may be part of an air filter cartridge, part of an item of medical personal protective equipment such as a mask or a pair of gloves, or a wipe. The composition may be applied to the surface of the solid surface or incorporated into the solid surface. Knowledge of how to Incorporate the composition into the solid surface of, for example, a part of an air filter cartridge, mask, gloves or a wipe, is within the ambit of the skilled person.

In a second aspect of the invention, a composition comprising an effective amount of a cucurbituril isomer selected from any one of cucurbit[6]uril, cucurbit[7]uril, cucurbit[8]uril, and mixtures thereof for disinfecting or preventing infection of a solid surface of one of an enveloped virus, a non-enveloped virus, or a mixture thereof is provided, wherein the solid surface is a human mucous membrane such as found in nasal passages or eyes.

The non-toxic or cytotoxic nature of the composition is particularly useful for application to human mucous membrane as use of the composition is less likely to result in unpleasant or dangerous side effects.

### Example 1: Inactivation of a SARS-COV-2 pseudotyped virus

The samples shown in Table 1, in duplicate, were diluted 1:5 v/v in Dulbecco's Modified Eagle's Medium (DMEM) and then with 100 microlitres of SARS-COV-2 pseudotyped virus (10¹²⁻¹³ virions comprising a SARS-COV-2 envelope and an HIV-derived RNA interior further genetically modified to carry a luciferase reporter gene in Dulbecco's Modified Eagle's Medium) for a final dilution of 1:10 v/v. The SARS-COV-2 pseudotyped virus was prepared using techniques known to the skilled person in the art, for example, as described in Crawford et al. ("Protocol and Reagents for Pseudotyping Lentiviral Particles with SARS-CoV-2 Spike Protein for Neutralization Assays", Viruses, 12, 513 (2020)), Hoffmann et al. ("SARS-CoV-2 Cell Entry Depends on ACE2 and TMPRSS2 and Is Blocked by a Clinically Proven Protease Inhibitor", Cell, 181, 271-280 (2020)) and Giroglou et al. ("Retroviral Vectors Pseudotyped with Severe Acute Respiratory Syndrome Coronavirus S Protein", Journal of Virology, 9007-9015 (September 2004)). Further dilutions were carried out whilst maintaining the concentration of virions constant.

**Table 1: Description of test samples of cucurbituril in aqueous media.**

| **Sample number** | **Cucurbituril** | **Aqueous media** |
|---|---|---|
| C1 | 0.5 % w/v cucurbit[n]uril¹ | DMEM² |
| C2 | 0.5 % w/v cucurbit[7]uril ³ | DMEM |
| C3 | 0.5 % w/v cucurbit[8]uril | DMEM |
| C4 | 0.5 % w/v cucurbit[n]uril | 0.95 % w/v phenoxyethanol and 0.13 % w/v xanthan gum |
| C6 | 0.5 % w/v cucurbit[n]uril | 3 % w/v lactic acid and 1 % w/v sodium laureth sulphate |
| C7 | 1 % w/v cucurbit[n]uril | 0.95 % w/v phenoxyethanol and 0.26 % w/v xanthan gum |
| C8 | 0.5 % w/v cucurbit[n]uril | 0.5 % w/v copper sulphate |

| | | |
|---|---|---|
| ¹ Cucurbit[n]uril is a mixture of cucurbit[6]uril, cucurbit[7]uril and cucurbit[8]uril with about 20 % w/w cucurbit[8]uril and less than 1 % w/w other cucurbituril isomers prepared in accordance with the process described on pages 1 to 14 and in the Examples of WO 2018/115822 (Aqdot Limited), and is available from AQDOT LIMITED, Cambridge, United Kingdom. ² Dulbecco's Modified Eagle's Medium. ³ Available from Sigma-Aldrich Inc. | | |

The various diluted samples were incubated at 37 degrees Celsius for 2 hours to allow the samples to inactivate the pseudotyped virus. The diluted samples were then added to 293T-ACE2-TMPRSS2 cells (human embryonic kidney cells and prepared by the Virology Department at University of Cambridge) and the cells incubated at 37 degrees Celsius for 48 hours to allow the virus to reproduce and thus the amount of luciferase to increase. Angiotensin-converting enzyme 2 (ACE2) is an enzyme attached to the cell membranes of cells which serves as the entry point into cells for some coronaviruses, including SARS-COV-2. It is reported by Hoffmann et al. that SARS-COV-2 uses the SARS-COV receptor ACE2 for entry and the serine protease TMPRSS2 (transmembrane serine protease 2) for viral spike protein priming. Cell survival was recorded as assessed by visual observation using optical microscopy and diluted samples where cell survival was no higher than 50 % were discarded. The cells for the remaining diluted samples were lysed and the concentration of luciferase was measured for each diluted sample using a luminometer to indicate the level of virus reproduction and hence virus infection of the cells.

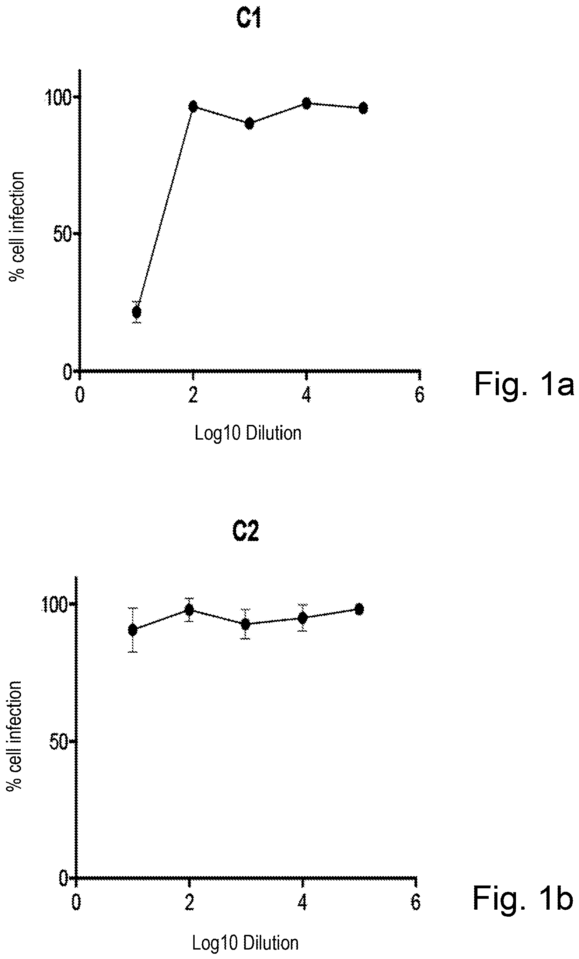

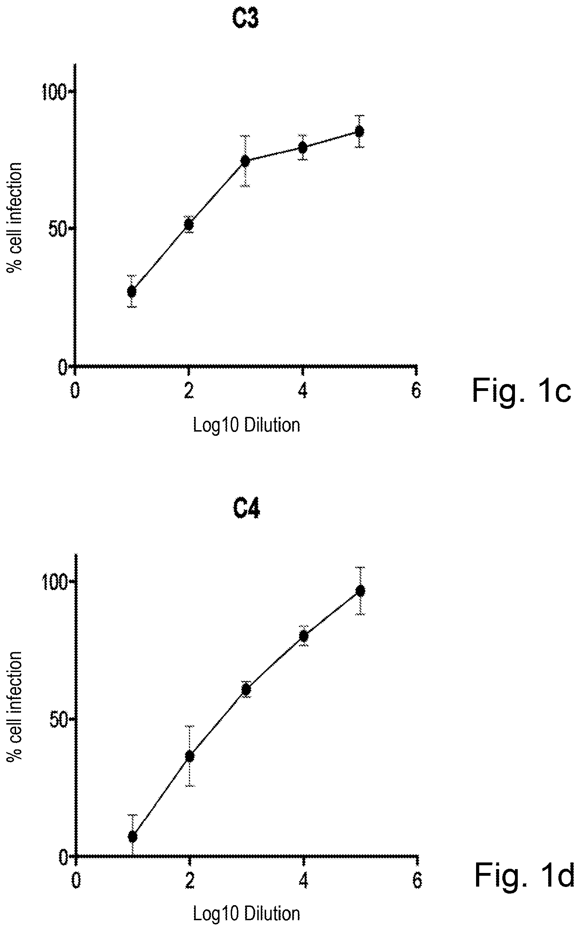

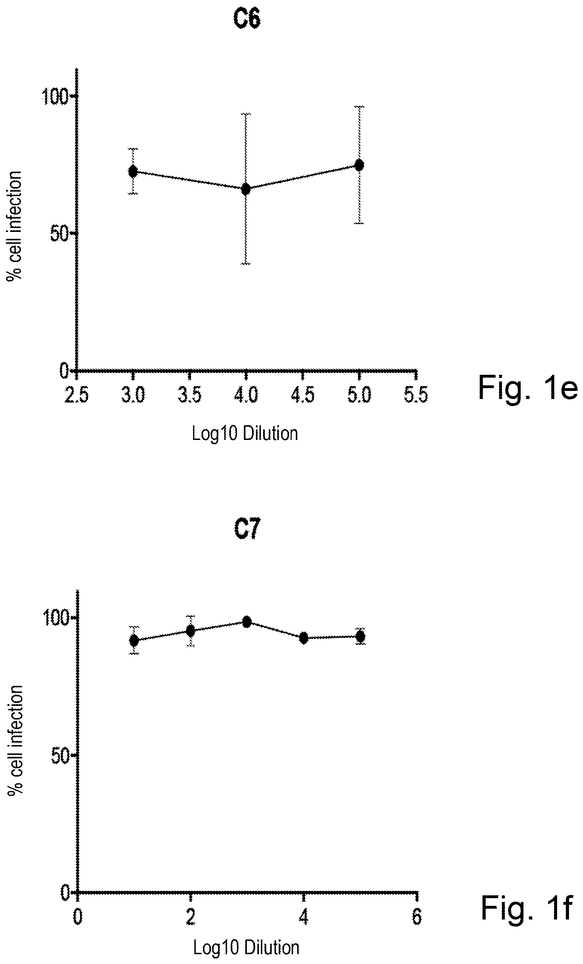

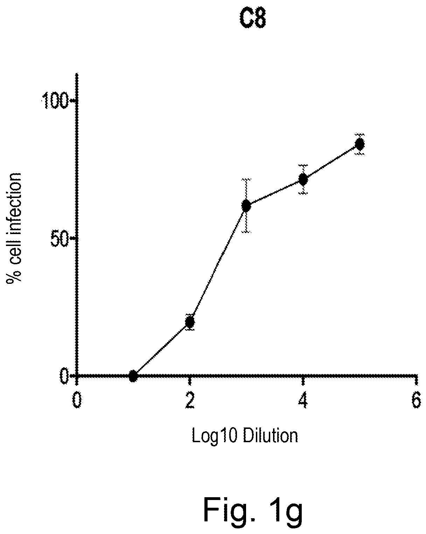

The results of the luciferase measurements are reproduced in Figures 1a to 1g which show the % cell infection versus sample dilution for each of samples C1 to C8. The 1:10 and 1:100 dilutions for sample C6 showed cell survival no higher than 50 % and the luciferase concentration was therefore not measured for these dilutions. Both samples comprise anti-bacterial compounds. C8, which also comprises an antibacterial compound and was effective at preventing cell infection, also showed signs of cell death. Samples C2, C6 and C7 were shown to be ineffective at preventing cell infection. In contrast, samples C1, C3 and C4 were effective at preventing cell infection. Samples C1 and C3 furthermore do not comprise an anti-bacterial compound.

The foregoing description of the results is reflected in the IC₅₀, i.e., the dilution factor of the samples required to achieve a reduction of at least 50 % in cell infection, which are summarised in Table 2.

**Table 2: The dilution factor for each sample required to achieve a reduction of at least 50 % in cell infection (IC₅₀).**

| **Sample number** | **Cucurbituril** | **Aqueous media** | **IC₅₀** |
|---|---|---|---|
| C1 | 0.5 % w/v cucurbit[n]uril | DMEM | 19 |
| C2 | 0.5 % w/v cucurbit[7]uril | DMEM | - |
| C3 | 0.5 % w/v cucurbit[8]uril | DMEM | 102 |
| C4 | 0.5 % w/v cucurbit[n]uril | 0.95 % w/v phenoxyethanol and 0.13 % w/v xanthan gum | 422 |
| C6 | 0.5 % w/v cucurbit[n]uril | 3 % w/v lactic acid^{a} and 1 % w/v sodium laureth sulphate | - |
| C7 | 1 % w/v cucurbit[n]uril | 0.95 % w/v phenoxyethanol and 0.26 % w/v xanthan gum | - |
| C8 | 0.5 % w/v cucurbit[n]uril | 0.5 % w/v copper sulphate^{b} | 988 |

| | | | |
|---|---|---|---|
| ^{a} known anti-bacterial ^{b} known fungicide, herbicide and algicide | | | |

### Example 2: Inactivation of a SARS-COV-2 pseudotyped virus

A second series of samples comprising cucurbituril isomers in aqueous media were tested in the same manner as described for Example 1 except on this occasion, the dilutions of sample and virus were allowed to incubate for just 1 hour at 37 degrees Celsius.

A description of each sample and the IC₅₀ for each is provided in Table 3.

**Table 3: Description of test samples of cucurbituril in aqueous media and corresponding dilution factor for each sample required to achieve a reduction of at least 50 % in cell infection (IC₅₀).**

| **Sample number** | **Cucurbituril** | **Aqueous media** | **IC₅₀** |
|---|---|---|---|
| D1 | 0.5 % w/v cucurbit[n]uril | 0.95 % w/v phenoxyethanol and 0.13 % w/v xanthan gum | 970 |
| D2 | 0.5 % w/v cucurbit[8]uril | DMEM | 113 |
| D4 | 0.5 % w/v cucurbit[n]uril | 0.95 % w/v phenoxyethanol and 0.13 % w/v xanthan gum | 106 |
| D5 | 0.1 % w/v cucurbit[8]uril | 0.95 % w/v phenoxyethanol and 0.13 % w/v xanthan gum | 1.4 |
| D6 | 0.5 % w/v cucurbit[8]uril | 0.95 % w/v phenoxyethanol and 0.13 % w/v xanthan gum | 18 |
| D7 | 0.5 % w/v cucurbit[8]uril | 0.1 % w/v phenoxyethanol in DMEM | 27 |
| D8 | 0.5 % w/v cucurbit[8]uril | 0.1 % w/v sodium laureth sulphate in DMEM | 16 |

Notable cell death was not observed with any of the sample at any of the tested dilutions. Samples D6, D7 and D8 all comprise 0.5 % w/v cucurbit[8]uril and have similar IC₅₀ values regardless of the presence of the anti-bacterial agent phenoxyethanol, whereas sample D5 which comprises only 0.1 % w/v cucurbit[8]uril has a significantly lower IC₅₀ value. Sample D2, which also comprises 0.5 % w/v cucurbit[8]uril has a much higher IC₅₀ value suggesting that the presence of phenoxyethanol or sodium laureth sulphate at the tested levels may reduce the effectiveness of cucurbit[8]uril at reducing cell infection by the virus. The difference in IC₅₀ value for samples D1 and D4 suggests that there is a difference in ostensibly identical test products (which were prepared separately), however it is clear from those values that, regardless, cucurbit[n]uril appears to be less effective than cucurbit[8]uril in the presence of phenoxyethanol and xanthan gum at the tested levels of cucurbituril, phenoxyethanol and xanthan gum. Sample D2 comprising 0.5 % w/v cucurbit[8]uril in DMEM replicates accurately the result for the duplicate sample C3 in Example 1.

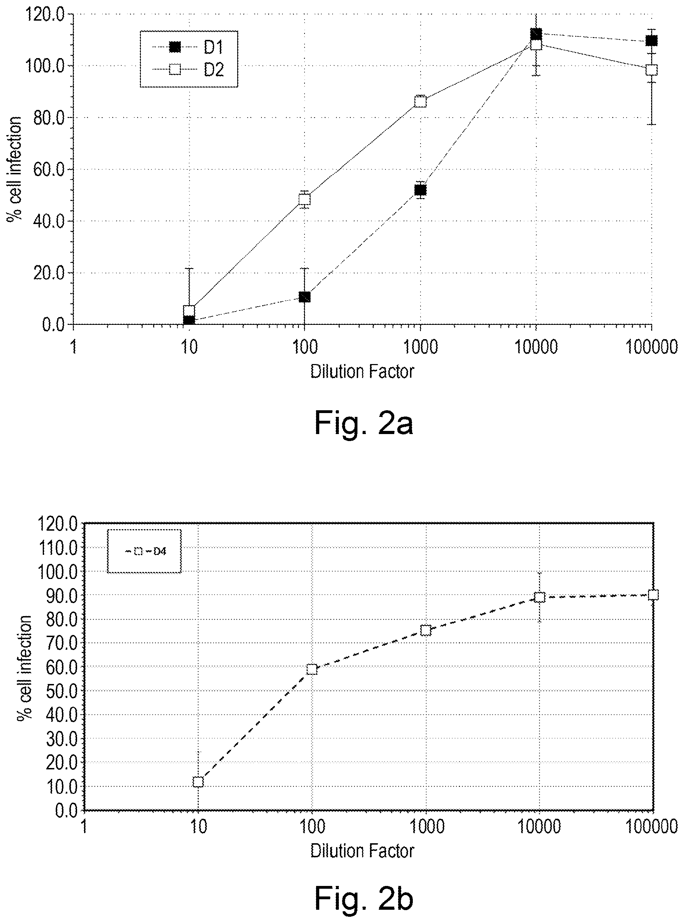

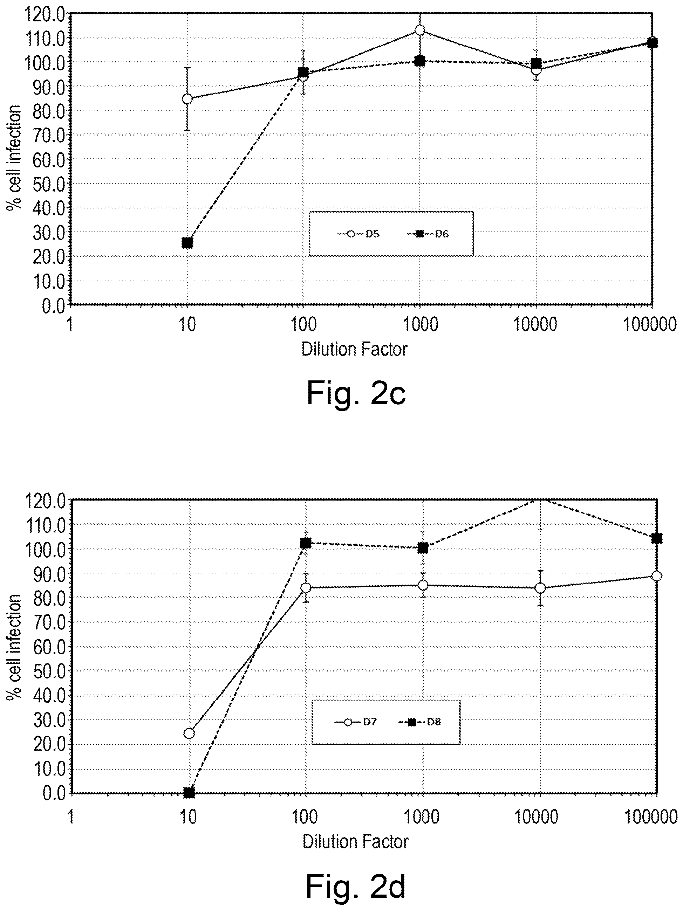

Figures 2a to 2d illustrate the results of the % cell infection versus sample dilution for samples D1, D2 and D4 to D8.

### Example 3: Inactivation of murine norovirus (strain S99 Berlin)

Virucidal activity of an aqueous suspension of mixed amorphous cucurbituril particles (a dry mixture of cucurbit[6]uril, cucurbit[7]uril and cucurbit[8]uril sold as AqFresh^{RTM} by Aqdot Limited, England) against murine norovirus (strain S99 Berlin), a non-enveloped RNA virus, was determined under British Standard method BS EN 14476: 2013 + A2: 2019 'Chemical disinfectants and antiseptics - Quantitative suspension test for the evaluation of virucidal activity in the medical area'. The standard method describes a test method and the minimum requirements for virucidal activity of a chemical disinfectant and antiseptic products that form a homogenous physically stable preparation when diluted with deionised water. Products can only be tested at a maximum concentration of 80 % v/v as some dilution is always produced by adding the test organisms and interfering substances.

In brief, a sample of the test product (neat or diluted in deionised water) was added to a test suspension of virus in a solution of interfering substance. The mixture was maintained at 20 +/- 1 degrees Celsius for about 5 minutes or about 60 minutes. At the end of this contact time, an aliquot was taken and the virucidal action in this portion was immediately suppressed by dilution of the sample in ice-cold cell maintenance medium. The dilutions were transferred into cell culture units using cell suspension. Infectivity tests were completed using the quantal test. After incubation, the titres of infectivity were calculated according to Spearman and Käber. Reduction of virus infectivity was calculated from differences of log virus titres before (virus control) and after treatment with the product.

The aqueous suspension has a pH 3.7-4.9 and has the composition (% w/w): 98.42 water, 0.13 xanthum gum, 0.95 phenoxyethanol, and 0.50 AqFresh^{RTM}.

The virucidal performance of the aqueous suspension was tested with the interfering substances of 0.3 g/l bovine serum albumin and a mixture of 3 g/l bovine serum albumin and 3 ml/l sheep erythrocytes, and at concentrations of 80, 50 and 0.10 % v/v.

The results as Log TCID₅₀ are presented in Tables 4a and 4b below with the interfering substances of 3 g/l bovine serum albumin and a mixture of 3 g/l bovine serum albumin and 3 ml/l sheep erythrocytes respectively. Log TCID₅₀ is the negative logarithm of the 50 % infecting dose of a virus suspension or that dilution of the virus suspension that induces a CPE in 50 % of cell culture units, wherein CPE (viral cytopathic effect) means a morphological alteration of cells and/or their destruction as a consequence of viral multiplication as recited in Section 3 and Annex C.1 of BS EN 14476: 2013 + A2: 2019.

**Table 4a: Log TCID₅₀ for murine norovirus (strain S99 Berlin) at aqueous suspension concentrations of 80, 50 and 0.10 % v/v with interfering substance of 0.3 g/l bovine serum albumin.**

| **Aqueous suspension concentration (% v/v)** | **Virus contact time (minutes)** | **Log TCID₅₀** | **Log reduction** | **Relative activity (%)** |
|---|---|---|---|---|
| 0 | 5 | 6.67 | 0 | 100 |
| 0.10 | 5 | 6.58 | 0.08 | 83 |
| 50 | 5 | 5.83 | 0.83 | 15 |
| 80 | 5 | 5.75 | 0.92 | 12 |
| | | | | |
| 0 | 60 | 6.50 | 0 | 100 |
| 0.10 | 60 | 6.33 | 0.17 | 68 |
| 50 | 60 | 5.50 | 1.00 | 10 |
| 80 | 60 | 5.50 | 1.00 | 10 |

**Table 4b: Log TCID₅₀ for murine norovirus (strain S99 Berlin) at aqueous suspension concentrations of 80, 50 and 0.10 % v/v with interfering substances of 3 g/l bovine serum albumin and 3 ml/I sheep erythrocytes.**

| **Aqueous suspension concentration (% v/v)** | **Virus contact time (minutes)** | **Log TCID₅₀** | **Log reduction** | **Relative activity (%)** |
|---|---|---|---|---|
| 0 | 5 | 7.00 | 0 | 100 |
| 0.10 | 5 | 6.96 | 0.04 | 91 |
| 50 | 5 | 6.38 | 0.63 | 23 |
| 80 | 5 | 6.21 | 0.79 | 16 |
| | | | | |
| 0 | 60 | 6.71 | 0 | 100 |
| 0.10 | 60 | 6.83 | -0.12 | 132 |
| 50 | 60 | 6.04 | 0.67 | 21 |
| 80 | 60 | 5.92 | 0.79 | 16 |

### Example 4: Inactivation of modified vaccinia virus Ankara (MVA), ATCC VR-1508

Virucidal activity of the aqueous suspension of mixed amorphous cucurbituril particles (AqFresh^{RTM} from Aqdot Limited, England) of Example 3 against modified vaccinia virus Ankara (MVA), ATCC VR-1508, an enveloped DNA virus, was determined in the same manner as described for Example 3.

The results as Log TCID₅₀ are presented in Tables 5a and 5b below with the interfering substances of 0.3 g/l bovine serum albumin and a mixture of 3 g/l bovine serum albumin and 3 ml/l sheep erythrocytes respectively.

**Table 5a: Log TCID₅₀ for modified vaccinia virus Ankara (MVA) (ATCC VR-1508) at aqueous suspension concentrations of 80, 50 and 0.10 % v/v with interfering substance of 0.3 g/l bovine serum albumin.**

| **Aqueous suspension concentration (% v/v)** | **Virus contact time (minutes)** | **Log TCID₅₀** | **Log reduction** | **Relative activity (%)** |
|---|---|---|---|---|
| 0 | 5 | 7.08 | 0 | 100 |
| 0.10 | 5 | 7.04 | 0.04 | 91 |
| 50 | 5 | 6.50 | 0.58 | 26 |
| 80 | 5 | 6.00 | 1.08 | 8 |
| | | | | |
| 0 | 60 | 6.88 | 0 | 100 |
| 0.10 | 60 | 6.88 | 0 | 100 |
| 50 | 60 | 6.17 | 0.71 | 19 |
| 80 | 60 | 5.63 | 1.25 | 6 |

**Table 5b: Log TCID₅₀ for modified vaccinia virus Ankara (MVA) (ATCC VR-1508) at aqueous suspension concentrations of 80, 50 and 0.10 % v/v with interfering substances of 3 g/l bovine serum albumin and 3 ml/I sheep erythrocytes.**

| **Aqueous suspension concentration (% v/v)** | **Virus contact time (minutes)** | **Log TCID₅₀** | **Log reduction** | **Relative activity (%)** |
|---|---|---|---|---|
| 0 | 5 | 7.17 | 0 | 100 |
| 0.10 | 5 | 7.08 | 0.08 | 83 |
| 50 | 5 | 7.00 | 0.17 | 68 |
| 80 | 5 | 6.46 | 0.71 | 19 |
| | | | | |
| 0 | 60 | 7.04 | 0 | 100 |
| 0.10 | 60 | 7.13 | -0.08 | 120 |
| 50 | 60 | 6.79 | 0.25 | 56 |
| 80 | 60 | 6.29 | 0.75 | 18 |

### Example 5: Inactivation of feline coronavirus (Strain Munich)

Virucidal activity of the aqueous suspension of mixed amorphous cucurbituril particles (AqFresh^{RTM} from Aqdot Limited, England) of Example 3 against feline coronavirus (Strain Munich), an enveloped RNA virus, was determined in the same manner as described for Example 3.

The results as Log TCID₅₀ are presented in Tables 6a and 6b below with the interfering substances of 0.3 g/l bovine serum albumin and a mixture of 3 g/l bovine serum albumin and 3 ml/l sheep erythrocytes respectively.

**Table 6a: Log TCID₅₀ for feline coronavirus (Strain Munich) at aqueous suspension concentrations of 80, 50 and 0.10 % v/v with interfering substance of 0.3 g/l bovine serum albumin.**

| **Aqueous suspension concentration (% v/v)** | **Virus contact time (minutes)** | **Log TCID₅₀** | **Log reduction** | **Relative activity (%)** |
|---|---|---|---|---|
| 0 | 5 | 6.58 | 0 | 100 |
| 0.10 | 5 | 6.46 | 0.13 | 74 |
| 50 | 5 | 6.17 | 0.42 | 38 |
| 80 | 5 | 5.38 | 1.21 | 6 |
| | | | | |
| 0 | 60 | 6.42 | 0 | 100 |
| 0.10 | 60 | 6.29 | 0.13 | 74 |
| 50 | 60 | 5.88 | 0.54 | 29 |
| 80 | 60 | 5.00 | 1.42 | 4 |

**Table 6b: Log TCID₅₀ for feline coronavirus (Strain Munich) at aqueous suspension concentrations of 80, 50 and 0.10 % v/v with interfering substances of 3 g/l bovine serum albumin and 3 ml/I sheep erythrocytes.**

| **Aqueous suspension concentration (% v/v)** | **Virus contact time (minutes)** | **Log TCID₅₀** | **Log reduction** | **Relative activity (%)** |
|---|---|---|---|---|
| 0 | 5 | 6.79 | 0 | 100 |
| 0.10 | 5 | 6.79 | 0 | 100 |
| 50 | 5 | 6.38 | 0.42 | 38 |
| 80 | 5 | 6.00 | 0.79 | 16 |
| | | | | |
| 0 | 60 | 6.71 | 0 | 100 |
| 0.10 | 60 | 6.75 | -0.04 | 110 |
| 50 | 60 | 6.25 | 0.46 | 35 |
| 80 | 60 | 5.92 | 0.79 | 16 |

### Example 6: Inactivation of poliovirus type 1 (LSc 2ab)

Virucidal activity of the aqueous suspension of mixed amorphous cucurbituril particles (AqFresh^{RTM} from Aqdot Limited, England) of Example 3 against poliovirus type 1 (LSc 2ab), a non-enveloped RNA virus, was determined in the same manner as described for Example 3.

The results as Log TCID₅₀ are presented in Tables 7a and 7b below with the interfering substances of 0.3 g/l bovine serum albumin and a mixture of 3 g/l bovine serum albumin and 3 ml/l sheep erythrocytes respectively.

**Table 7a: Log TCID₅₀ for poliovirus type 1 (LSc 2ab) at aqueous suspension concentrations of 80, 50 and 0.10 % v/v with interfering substance of 0.3 g/l bovine serum albumin.**

| **Aqueous suspension concentration (% v/v)** | **Virus contact time (minutes)** | **Log TCID₅₀** | **Log reduction** | **Relative activity (%)** |
|---|---|---|---|---|
| 0 | 5 | 6.75 | 0 | 100 |
| 0.10 | 5 | 6.88 | -0.13 | 135 |
| 50 | 5 | 6.75 | 0.00 | 100 |
| 80 | 5 | 6.58 | 0.17 | 68 |
| | | | | |
| 0 | 60 | 6.63 | 0 | 100 |
| 0.10 | 60 | 6.58 | 0.04 | 91 |
| 50 | 60 | 6.54 | 0.08 | 83 |
| 80 | 60 | 6.54 | 0.08 | 83 |

**Table 7b: Log TCID₅₀ for poliovirus type 1 (LSc 2ab) at aqueous suspension concentrations of 80, 50 and 0.10 % v/v with interfering substances of 3 g/l bovine serum albumin and 3 ml/I sheep erythrocytes.**

| **Aqueous suspension concentration (% v/v)** | **Virus contact time (minutes)** | **Log TCID₅₀** | **Log reduction** | **Relative activity (%)** |
|---|---|---|---|---|
| 0 | 5 | 7.08 | 0 | 100 |
| 0.10 | 5 | 7.08 | 0 | 100 |
| 50 | 5 | 7.08 | 0 | 100 |
| 80 | 5 | 7.00 | 0.08 | 83 |
| | | | | |
| 0 | 60 | 7.04 | 0 | 100 |
| 0.10 | 60 | 7.00 | 0.04 | 91 |
| 50 | 60 | 7.04 | 0 | 100 |
| 80 | 60 | 6.92 | 0.13 | 74 |

### Example 7: Inactivation of adenovirus type 5 (strain Adenoid 75 (ATCC VR-5))

Virucidal activity of the aqueous suspension of mixed amorphous cucurbituril particles (AqFresh^{RTM} from Aqdot Limited, England) of Example 3 against adenovirus type 5 (strain Adenoid 75 (ATCC VR-5)), a non-enveloped DNA virus, was determined in the same manner as described for Example 3.

The results as Log TCID₅₀ are presented in Tables 8a and 8b below with the interfering substances of 0.3 g/l bovine serum albumin and a mixture of 3 g/l bovine serum albumin and 3 ml/l sheep erythrocytes respectively.

**Table 8a: Log TCID₅₀ for adenovirus type 5 (strain Adenoid 75 (ATCC VR-5)) at aqueous suspension concentrations of 80, 50 and 0.10 % v/v with interfering substance of 0.3 g/l bovine serum albumin.**

| **Aqueous suspension concentration (% v/v)** | **Virus contact time (minutes)** | **Log TCID₅₀** | **Log reduction** | **Relative activity (%)** |
|---|---|---|---|---|
| 0 | 5 | 7.21 | 0 | 100 |
| 0.10 | 5 | 7.13 | 0.08 | 83 |
| 50 | 5 | 6.92 | 0.29 | 51 |
| 80 | 5 | 6.88 | 0.33 | 47 |
| | | | | |
| 0 | 60 | 7.00 | 0 | 100 |
| 0.10 | 60 | 7.00 | 0 | 100 |
| 50 | 60 | 6.88 | 0.13 | 74 |
| 80 | 60 | 6.67 | 0.33 | 47 |

**Table 8b: Log TCID₅₀ for adenovirus type 5 (strain Adenoid 75 (ATCC VR-5)) at aqueous suspension concentrations of 80, 50 and 0.10 % v/v with interfering substances of 3 g/l bovine serum albumin and 3 ml/l sheep erythrocytes.**

| **Aqueous suspension concentration (% v/v)** | **Virus contact time (minutes)** | **Log TCID₅₀** | **Log reduction** | **Relative activity (%)** |
|---|---|---|---|---|
| 0 | 5 | 7.38 | 0 | 100 |
| 0.10 | 5 | 7.29 | 0.08 | 83 |
| 50 | 5 | 7.21 | 0.17 | 68 |
| 80 | 5 | 7.13 | 0.25 | 56 |
| | | | | |
| 0 | 60 | 7.13 | 0 | 100 |
| 0.10 | 60 | 7.17 | -0.04 | 110 |
| 50 | 60 | 7.00 | 0.13 | 74 |
| 80 | 60 | 6.75 | 0.38 | 42 |

### Example 8: ISO 18184:2019 Textiles - Determination of antiviral activity of textile products (treated with aqueous solution of AqFresh^{RTM})

20 x 20 mm cotton swatches (about 0.40 g) were treated with 1.6 ml of an aqueous solution of 5 mg AqFresh^{RTM} per ml and allowed to soak for 2 minutes and then 200 microlitres of virus at a concentration of about 10⁷ TCID₅₀ (giving a final concentration of 10⁵) added at 25 +/- 1 degrees Celcius to the pre-treated cotton swatch and contact maintained for 2 hours +/-10 seconds.

Alternatively, 20 x 20 mm cotton swatches (about 0.40 g) were treated with 200 microlitres of virus at a concentration of about 10⁷ TCID₅₀ (giving a final concentration of 10⁵) at 25 +/- 1 degrees Celcius and then 1.6 ml of an aqueous solution of 5 mg AqFresh^{RTM} per ml allowed to soak into the pre-treated cotton swatch for 2 minutes and contact maintained for 2 hours +/- 10 seconds.

Following the contact time, the cotton swatch was recovered in 20 ml of cell culture media and enumerated onto an appropriate cell line. The TCID₅₀ was calculated following the appropriate incubation time and the antiviral activity calculated by comparison of the AqFresh^{RTM} to the immediate recover from a control swatch.

Viral strains tested were feline corona virus (Strain Munich) and murine norovirus (strain S99 Berlin).

The results are set forth in Table 9a and Table 9b for murine norovirus (strain S99 Berlin) and feline corona virus (Strain Munich) respectively.

**Table 9a: Determination of antiviral (murine norovirus (strain S99 Berlin)) activity of textile product pre- or post-treated with aqueous solution of AqFresh^{RTM} according to ISO 18184:2019 (^{a} without pre- or post-treatment with aqueous solution of AqFresh^{RTM}; 'post' and 'pre' mean post-treatment and pre-treatment with aqueous solution of AqFresh^{RTM} respectively).**

| **Swatch** | **Contact time (hours)** | **TCID₅₀ (Log)** | **Average TCID₅₀ (Log)** | **Reduction TCID₅₀ (Log)** | **Reduction TCID₅₀ (%)** |
|---|---|---|---|---|---|
| Control 1^{a} | 0 | 6.00 | | | |
| Control 2 | 0 | 6.08 | | | |
| Control 3 | 0 | 6.00 | 6.03 | | |
| | | | | | |
| Control 1 | 2 | 5.58 | | | |
| Control 2 | 2 | 5.71 | | | |
| Control 3 | 2 | 5.67 | 5.65 | 0.37 | 57.72 |
| | | | | | |
| Test 1 (post) | 2 | 4.00 | | | |
| Test 2 (post) | 2 | 4.00 | | | |
| Test 3 (post) | 2 | 4.08 | 4.03 | 2.00 | 99.00 |
| | | | | | |
| Test 1 (pre) | 2 | 4.79 | | | |
| Test 2 (pre) | 2 | 5.29 | | | |
| Test 3 (pre) | 2 | 5.00 | 5.03 | 1.00 | 90.00 |

**Table 9b: Determination of antiviral (feline corona virus (Strain Munich)) activity of textile product post-treated with aqueous solution of AqFresh^{RTM} according to ISO 18184:2019 (^{a} without pre- or post-treatment with aqueous solution of AqFresh^{RTM}).**

| **Swatch** | **Contact time (hours)** | **TCID₅₀ (Log)** | **Average TCID₅₀ (Log)** | **Reduction TCID₅₀ (Log)** | **Reduction TCID₅₀ (%)** |
|---|---|---|---|---|---|
| Control 1^{a} | 0 | 5.96 | | | |
| Control 2 | 0 | 6.00 | | | |
| Control 3 | 0 | 5.92 | 5.96 | | |
| | | | | | |
| Control 1 | 2 | 6.00 | | | |
| Control 2 | 2 | 5.83 | | | |
| Control 3 | 2 | 5.79 | 5.87 | 0.08 | 17.57 |
| | | | | | |
| Test 1 | 2 | 4.00 | | | |
| Test 2 | 2 | 4.13 | | | |
| Test 3 | 2 | 4.13 | 4.08 | 1.88 | 98.67 |

### Example 9: Study of the antiviral properties of AqFresh^{RTM}, cucurbit[6]uril, cucurbit[7]uril, and cucurbit[8]uril

### Materials and Methods

Cucurbituril in dry powdered form were mixed with sterile deionized water (dH₂O) to form an initial 5 % stock concentration (0.05g of powder/mL dH₂O, a 50mg/mL solution). These were then diluted appropriately in sterile dH₂O to form additional 2 %, 1 %, 0.5 % and 0.05 % stocks.

### Viruses

Herpes simplex virus, serotype two (HSV-2) (additional stocks were grown on Vero cells in-lab and stored at -80°C), respiratory syncytial virus (RSV) (additional stocks were grown on Vero cells in-lab and stored at -80°C), murine norovirus (strain S99 Berlin), coronavirus (strains 229E and OC43) (additional stocks were grown on A549 cells in-lab and stored at -80°C) and SARS-CoV-2.

### Cell Culture

All tissue culture media was supplemented with 1 % penicillin/streptomycin (P/S) (Merck Life Science UK Ltd, Dorset, United Kingdom) and 10 % heat inactivated foetal calf serum (FCS) (Merck Life Science UK) unless stated otherwise.

Vero cells were maintained in Dulbecco's Modified Eagle Medium (DMEM) modified with high glucose, L-glutamine, phenol red and sodium pyruvate. Cells were cultivated at 37 °C, 5 % CO₂ in 75 cm² flasks and passaged in a 1:6 ratio when confluent.

RAW 264.7 cells (Merck Life Science) were maintained in DMEM modified with phenol red and L-glutamine. Cells were cultivated at 37 °C, 5 % CO₂ in 75 cm² flasks and passaged via cell scraping when confluent.

A549 cells were maintained in F-12K medium (Thermo Fisher Scientific). Cells were cultivated at 37 °C, 5 % CO₂ in 75 cm² flasks and passaged in a 1:6 ratio when confluent.

MK-1 Lu cells (mink lung epithelial cells) were maintained in DMEM modified with high glucose, sodium pyruvate, phenol red and L-glutamine. Cells were cultivated at 37 °C, 5 % CO₂ in 75 cm² flasks and passaged in a 1:6 ratio when confluent.

### Titration by TCID₅₀ Assay

Samples were titrated in 96-well flat bottom plates in quadruplicate. The first four wells of the first column were filled with 180 µL of appropriate media (see Cell Culture) and all other wells were filled with 100 µL of media. The initial wells then had 20 µL of sample added, before the contents were mixed via pipetting. 100 µL of mixed sample was then transferred to the next four wells and mixed again. This serial dilution was repeated across the plate, with the exception of wells A12-D12, which were left unexposed to sample as a negative control. Plates were then incubated for an appropriate length of time depending on the virus being investigated. Virus titre was determined by cytopathic effects observed in wells via light microscopy examination. Titre was calculated using the Spearman-Karber method.

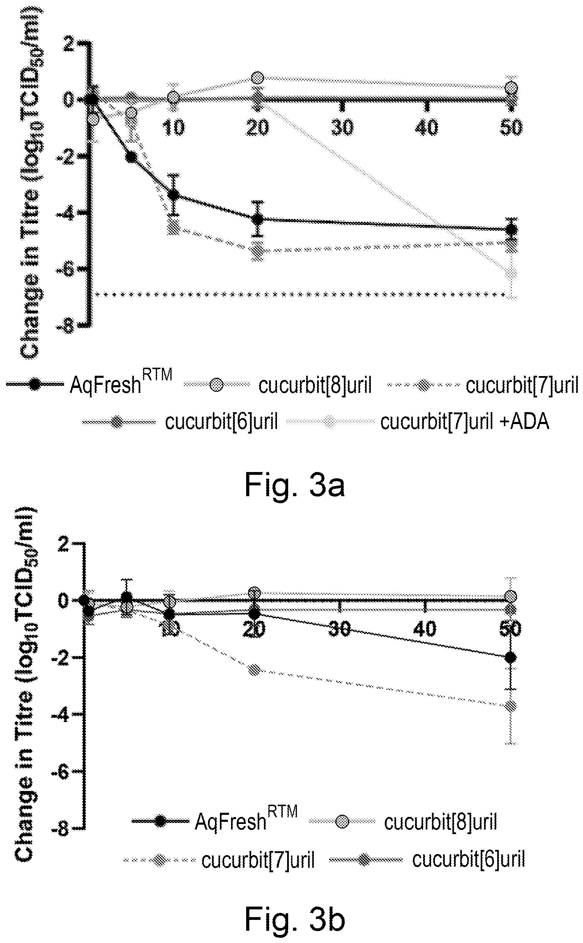

Each cucurbituril sample was mixed with the virus for 5 minutes before being serially diluted to determine viral titre. TCID₅₀ assays shown in Figure 3a indicates that both AqFresh^{RTM} and cucurbit[7]uril were effective at inhibiting herpes simplex virus serotype two (HSV-2), with an approximately 5 log reduction in viral titre observed at 20-50 mg/mL concentration. The lack of viral titre reduction observed in conjunction with cucurbit[6]uril and cucurbit[8]uril may indicate that it is the cucurbit[7]uril component of AqFresh^{RTM} which is responsible for the reduction.

Figure 3b shows the effects of AqFresh^{RTM} and cucurbit[7]uril on respiratory syncytial virus (RSV). TCID₅₀ assays confirm that both were also antiviral against RSV, with a 2-3 log reduction in viral titre at the highest concentrations. As previously, cucurbit[6]uril and cucurbit[8]uril were ineffective.

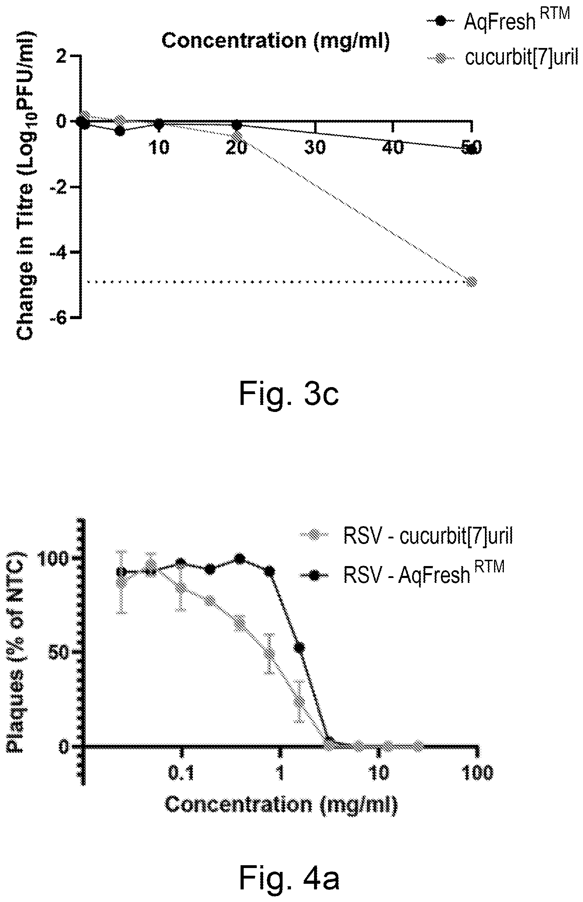

Figure 3c shows the effects of AqFresh^{RTM} and cucurbit[7]uril on SARS-CoV-2, the human coronavirus responsible for the COVID-19 pandemic. Titration assays against SARS-CoV-2 demonstrate that AqFresh^{RTM} and cucurbit[7]uril are both antiviral against SARS-CoV-2, but to different extents. AqFresh^{RTM} only has limited efficacy, even at a 50 mg/mL concentration, whilst cucurbit[7]uril is highly effective at 50 mg/mL but largely ineffective at 20 mg/mL and below.

### Guest-host Chemistry Assay

Cucurbit[7]uril powder stock was mixed with adamantylamine in a 1:1 molar ratio and resuspended at 50 mg/mL in sterile dH₂O. Samples from this solution were then diluted further to form stocks of 50, 20, 10, 5 and 0.5 mg/mL.

In order to confirm that this inhibition was occurring on account of supramolecular binding of the cucurbituril to the virus (herpes simplex virus serotype two (HSV-2)), a guest-host chemistry assay with cucurbit[7]uril, where the cavity is occupied by 1-Adamantylamine (ADA) was carried out. ADA has one of the strongest binding affinities (1.7 +/- 0.8 x 10¹⁴ M⁻¹) with cucurbit[7]uril, meaning the cavity will be occupied. With the cavity occupied with ADA, no binding to the virus would be expected to occur. With reference to Figure 3a, for the 0.5-20 mg/mL concentrations tested, this was confirmed and no antiviral effect was observed. However, we showed that at 50 mg/mL concentration, the 1:1 cucurbit[7]uril:ADA mixture was associated with a significant decrease in viral titre.

### Dose-Response Assays

Cells were seeded at 170,000 per mL, with 500 µl of cell-and-media mixture added to each well of a 24 well plate (Corning, NY, USA). They were incubated at 37 °C overnight or until cells were 90-100 % confluent. Sterile Eppendorf tubes were then prepared containing 570 µl of cucurbituril mixed with DMEM to provide the desired concentration of cucurbituril. A 1:100 dilution of virus stock was also prepared. 30 µl of this diluted virus stock was added to each Eppendorf containing 570 µl of cucurbituril/media mix. An additional Eppendorf tube was also prepared containing just 570 µl DMEM plus 30 µL diluted virus stock to act at the non-treatment control (NTC). Eppendorf tubes containing cucurbituril-virus mix and NTC Eppendorf were incubated for one hour at 37 °C and then all media was removed from the 24-well plate and 200 µL of each cucurbituril-virus mix added (in duplicate). The plate was then incubated for one hour at 37 °C. Finally, the cucurbituril-virus mixes were removed by pipetting and 500 µL of methylcellulose DMEM was added to each well. The plate was then incubated under the formation of visible plaques. EC₅₀ (half maximal effective concentration) values were calculated by performing a non-linear fit of cucurbituril vs. response - variable slope (four parameters) in *Graphpad Prism* software, version 9.1.1.

Figure 4a shows that AqFresh^{RTM} has an EC₅₀ of 1.51 mg/mL and cucurbit[7]uril has an EC₅₀ of 1.27 mg/mL for inhibiting herpes simplex virus serotype two (HSV-2).

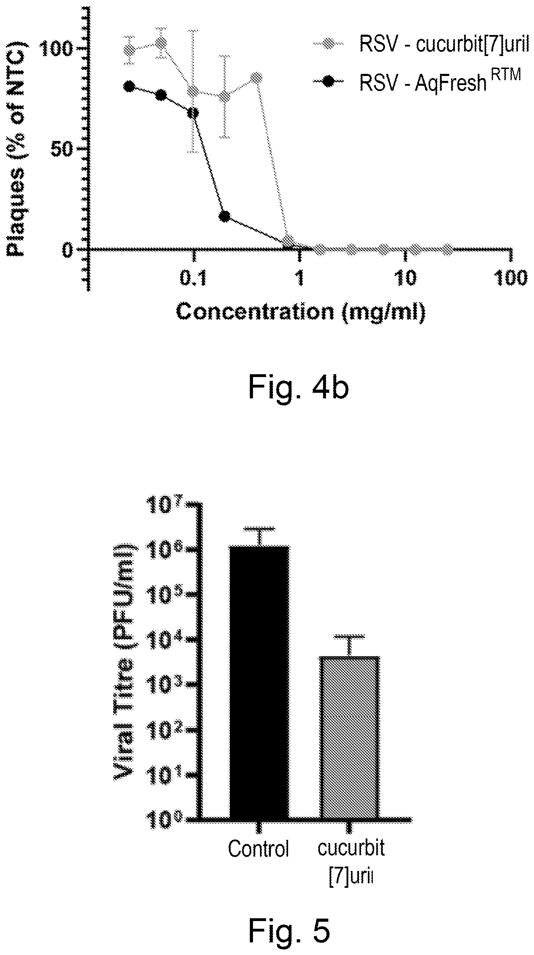

Figure 4b shows that cucurbit[7]uril has an EC₅₀ value of 1.07 mg/mL for respiratory syncytial virus (RSV).

### Virucidal Assays

Cells appropriate to the virus were seeded into a 96-well plate at 15,000 cells per well and left until 90-100 % confluent. Virus stock (55 µL) was incubated with the desired amount of cucurbituril to achieve the IC₉₀ concentration in 55 µL total volume (made up with PBS). A non-treatment control was also created, with 55 µL virus stock mixed with 55 µl PBS. Both virus plus cucurbituril and non-treatment controls were incubated for 1 hour at 37 °C. Then six 2 mL Eppendorf tubes were prepared, each containing 450 µL of appropriate cell culture medium (three are used with cucurbituril, three with the non-treatment control). After incubation, 50 µL are taken from the virus plus cucurbituril mix and added into the first Eppendorf tube before being re-suspended 4-5 times. 50 µL is then serially diluted into the other two tubes, leaving three Eppendorf tubes at 1:20, 1:200 and 1:2000 dilution respectively. This process is also repeated for the non-treatment control. 50 µl from the virus plus antiviral mix (1:20 dilution) is then added to wells A1 and A2 of the 96-well plate. 50 µL from the 1:200 virus-antiviral mix is added to wells A3 and A4, and 50 µl from the 1:2000 virus-antiviral mix is added to wells A5 and A6. 50 µl from these wells is then serially diluted down the plate to row G. In well H1, 50 µL of the originally incubated virus plus cucurbituril is added, resuspended, and serially diluted to well H6. This process is repeated for the non-treatment control in wells A7-A12. The plate is then incubated for one hour at 37 °C. All medium is then discarded and re-plated with 100 µL of methyl cellulose. The plate is then incubated at 37 °C until visible plaques are formed, before being stained with crystal violet to allow plaque-counting.

A virucidal assay is used to distinguish between destructive (virucidal) and non-destructive (virustatic) interactions between antivirals and viruses. In this instance, cucurbit[7]uril was mixed with inhibiting herpes simplex virus serotype two (HSV-2) for 60 minutes before being serially diluted across a 96-well plate. Were the interactions between the CBs and virus reversible non-destructive binding events, then serial dilution would cause removal of the CB from the viral surface and infections would be observed. However, with reference to Figure 5, after serial dilution it was observed that there is a greater than 2-log reduction in viral titre indicating that the binding of cucurbit[7]uril to herpes simplex virus serotype two (HSV-2) is destructive and hence is virucidal.

### DNA exposure assay

### Treatment and DNase

100 µL of cell-free viral sample was mixed with 100 µL of cucurbituril (final concentration should preferable be between 50-400 µg/ml). A control where the viral sample is treated with pure media rather than cucurbituril was also be performed. This control was treated exactly in the same manner as the cucurbituril treated samples. This sample is known as the NTC. The samples were incubated for 1 hour at 37 °C in 5 % CO₂ and 5 µl of each sample were removed and placed into new Eppendorf tubes. Then 5 µl of RNase free water was added to the Eppendorf tube and the tubes placed on ice. The DNA concentration of the samples was then measured using a NanoPhotometer^{RTM} spectrophotometer. The samples (originally 5 µl aliquots of each sample) were then discarded.

10X Turbo^{™} DNase Buffer was then added to the main retained samples to 1 X concentration in each sample. In the sample with the highest amount of DNA as measured by the nanophotometer, 1 µL of Turbo^{™} DNase per 1 µg DNA present was added. An equal volume of Turbo^{™} DNase was added to all the other samples. The samples were then incubated for 30 minutes at 37 °C in 5 % CO₂. EDTA was then added to a final concentration of 15 mM and the samples heated at 75°C for 10 minutes thereby deactivating the Turbo^{™} DNase.

### Extraction

25 µL Proteinase K was then added to the samples (any samples of volume < 200 µL are adjusted to a final volume of 200 µL using PBS). 200 µL lysis buffer was then added and the samples vortexed for 15 seconds. Then the samples were incubated at 56 °C for 15 minutes. Then 250 µL 96-100 % molecular grade ethanol was added to the samples and vortexing continued for a further 15 seconds. The samples were then incubated for 5 minutes at room temperature and the samples added to a Viral Spin Column in a collection tube. The column was centrifuged at 6800 × g for 1 minute and then collection tube was replaced. 500 µL wash buffer (WII) was then added the spin column centrifuged again at 6800 × g for 1 minute (close lid). The collection tube was emptied and the wash buffer added again and the spin column centrifuged again. The collection tube was then replaced and the spin column centrifuged at maximum speed for 1 minute to remove any residual Wash Buffer (WII). The spin column was then placed in a clean Recovery Tube which was eluted with 50 µL sterile RNase-free water (water was added to the centre of the cartridge) and the sample incubated at room temperature for 1 minute. The spin column was centrifuged at maximum speed for 1 minute to elute nucleic acids. As the Recovery Tube contained the purified viral nucleic acids, the spin column was discarded. The purified viral DNA was stored at -80 °C if not immediately used for downstream applications.

### PCR

The purified viral DNA samples were kept on ice and 5 µL of each sample removed and placed into new Eppendorf tubes. 5 ul of RNase free water was added to each Eppendorf tube and the tubes were placed on ice until the DNA concentration was measured using a NanoPhotometer^{RTM} spectrophotometer. The samples (originally of 5 µL) were then discarded. The remaining main samples were prepared for and then run on a PCR machine.

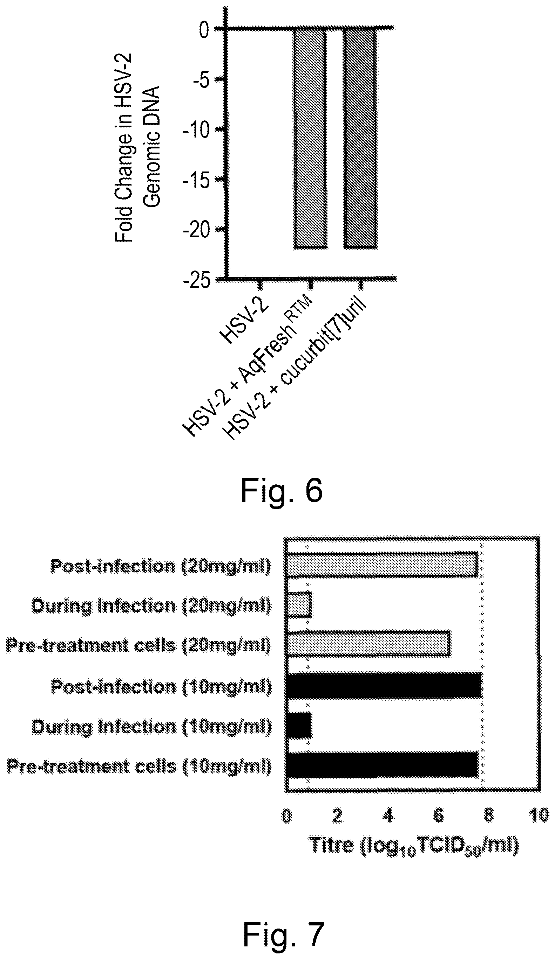

DNA exposure assays were performed to confirm the breakdown of the herpes simplex virus serotype two (HSV-2) viral capsid and release of the genome. Figure 6 illustrates that no DNA is detected following viral exposure to cucurbit[7]uril or AqFresh^{RTM}, subsequent exposure to DNAse, and PCR amplification. This absence suggests that the DNA was released following exposure to the cucurbituril, broken down by the enzyme, and could not be amplified. When the experiment was repeated with negative controls or cucurbit[6]uril in place of AqFresh^{RTM} or cucurbit[7]uril, DNA was detected indicating that they did not break down the viral capsid. No DNA was detected following exposure to cucurbit[8]uril although this is due to an unexpected interaction between cucurbit[8]uril and assay constituents.

### Time of Addition Study

Materials (10 or 20 mg) were added on cells 1 hour before infection, during infection or after infection, with viruses added using an multiplicity of infection (MOI) of 0.01, using a method described previously (Jones, S.T., et al. ('Modified cyclodextrins as broad-spectrum antivirals' Science Advances, 6, 5, eaax9318 (2020)) and Aoki-Utsubo et al., 'Time-of-addition and temperature-shift assays to determine particular step(s) in the viral life cycle that is blocked by antiviral substance(s)', Bio-Protocol, 8, 9, e2830 (2018)). Viral titres were then quantified by TCID₅₀ assay.

To further elucidate the antiviral mode of action of cucurbiturils, a series of time of addition studies was performed. Figure 7 illustrates that an antiviral effect was observed when the cucurbit[7]uril was added directly to the virus (herpes simplex virus serotype two (HSV-2)) before infection ('during infection'). We observed no viral inhibition when the cucurbit[7]uril was removed prior to viral introduction (pre-treatment'), or when added after the virus has already been exposed to the cells ('post-infection'), further indicating that the cucurbit[7]uril binds directly to the virus.

## Claims

1. A non-therapeutic method of disinfecting or preventing infection of a gaseous environment by, a liquid of, or a solid surface of one of an enveloped virus, a non-enveloped virus, or a mixture thereof, the method comprising the step of treating said gaseous environment, liquid, or solid surface with a composition comprising an effective amount of a cucurbituril isomer selected from any one of cucurbit[6]uril, cucurbit[7]uril, cucurbit[8]uril, and mixtures thereof or, for preventing infection of a solid surface, comprising the step of producing said solid surface from a composition comprising an effective amount of a cucurbituril isomer selected from any one of cucurbit[6]uril, cucurbit[7]uril, cucurbit[8]uril, and mixtures thereof.

2. A non-therapeutic method according to claim 1, wherein the enveloped virus is selected from the group consisting of family Herpesviridae, Poxviridae, Hepadnaviridae, Asfarviridae, Flaviviridae, Togaviridae, Coronaviridae, Orthomyxoviridae, Paramyxoviridae, Rhabdoviridae, Bunyavirales, Filoviridae, Pneumoviridae, and Retroviridae,
or wherein the enveloped virus is selected from the group consisting of genus simplexvirus, varicellovirus, orthopoxvirus, parapoxvirus, yatapoxvirus, molluscipoxvirus, orthohepadnavirus, hepacivirus, flavivirus, betacoronavirus, alphacoronavirus, deltacoronavirus, gammacoronavirus, alphainfluenzavirus, betainfluenzavirus, gammainfluenzavirus, morbillivirus, rubelavirus, lyssavirus, ebolavirus, orthopneumovirus, cytomegalovirus, and lentivirus,
or wherein the enveloped virus is selected from the group consisting of species herpes simplex virus 1, herpes simplex virus 2, varicella zoster virus, modified vaccinia virus Ankara (MVA), hepatitis B virus, hepatitis C virus, West Nile virus, dengue virus, tick-borne encephalitis virus, yellow fever virus, Zika virus, Middle East respiratory syndrome-related coronavirus, Severe acute respiratory syndrome-related coronavirus such as SARS-CoV, SARS-CoV-2 and feline coronavirus (Strain Munich), influenza A virus, influenza B virus, influenza C virus, measles virus, mumps virus, rabies virus, ebola virus, respiratory syncytial virus, cytomegalovirus, HIV-1 virus and HIV-2 virus.

3. A non-therapeutic method according to claim 1 or claim 2, wherein the non-enveloped virus is selected from the group consisting of family Picornaviridae, Caliciviridae, Adenoviridae, Reoviridae, Astroviridae, Circoviridae, Parvoviridae, Papillomaviridae and Polyomaviridae,
or wherein the non-enveloped virus is selected from the group consisting of genus enterovirus, rotavirus, norovirus, vesivirus, mastadenovirus, mamastrovirus, cyclovirus, protoparvovirus, alphapolyomavirus, betapolyomavirus, and gammapolyomavirus,
or wherein the non-enveloped virus is selected from the group consisting of species enterovirus A, enterovirus B, enterovirus C, coxsackievirus B4, poliovirus type 1, murine norovirus, feline calicivirus, rhinovirus A, rhinovirus B, rhinovirus C, Norwalk virus, Adenovirus type 5, and any one of rotavirus A to J.

4. A non-therapeutic method according to claim 1, wherein the composition comprises cucurbit[7]uril.

5. A non-therapeutic method according to claim 1, wherein the composition comprises cucurbit[8]uril.

6. A non-therapeutic method according to claim 5 wherein the composition additionally comprises cucurbit[6]uril and cucurbit[7]uril.

7. A non-therapeutic method according to any one of the preceding claims, wherein the composition additionally comprises a virucide, optionally wherein the virucide is selected from the group consisting of phenoxyethanol, alcohols such as isopropyl alcohol, ethanol and n-propanol, chlorine based bleach, peroxide-based bleach, an aldehyde such as formaldehyde, glutaraldehyde or ortho-phthalaldehyde, a quaternary ammonium compound such as benalkonium chloride or didecyldimethyl ammonium chloride, a chlorhexidine such as chlorhexidine digluconate, and an iodophor.

8. A non-therapeutic method according to claim 7 when dependent on claim 5, wherein the composition excludes other cucurbituril isomers, and wherein the weight ratio between phenoxyethanol and cucurbit[8]uril is less than 9:1, preferably less than 5, most preferably less than 3.

9. A non-therapeutic method according to claim 7 when dependent on claim 6, wherein the weight ratio between phenoxyethanol and cucurbit[8]uril is more than 5:1, preferably greater than 7:1, most preferably greater than 9:1.

10. A non-therapeutic method according to any one of the preceding claims, wherein the effective amount of the cucurbituril isomer is in the range 0.000005-5, 0.00005-2, 0.0005-1, 0.005-1, 0.05-1 % w/v.

11. A non-therapeutic method according to any one of claims 5 or 8 and claims 6 or 9 when dependent on claim 6, wherein cucurbit[8]uril comprises 10-30, preferably 15-25 % w/w total cucurbiturils.

12. A non-therapeutic method according to any one of claims 6 or 9 and claims 7, or 10 to 11 when dependent on claim 6, wherein cucurbituril other than cucurbit[6]uril, cucurbit[7]uril, cucurbit[8]uril comprises less than 5, less than 1, less than 0.5 % w/w total cucurbiturils, optionally wherein cucurbituril other than cucurbit[6]uril, cucurbit[7]uril, cucurbit[8]uril comprises at least 0.001 or at least 0.01 % w/w total cucurbiturils, wherein cucurbituril other than cucurbit[6]uril, cucurbit[7]uril, cucurbit[8]uril is preferably selected from the group consisting of cucurbit[5]uril, any one of cucurbit[9]uril to cucurbit[20]uril.

13. A non-therapeutic method according to any one of the preceding claims, wherein the composition is in the form of a solution or liquid suspension, optionally suitable for dispensing as an aerosol or spray.

14. A non-therapeutic method according to any one of the preceding claims, wherein the composition is in the form of a liquid coating and the step of treating the solid surface is coating the solid surface with the liquid composition.

15. A non-therapeutic method according to any one of the preceding claims, wherein the solid surface is part of an air filter cartridge, part of an item of medical personal protective equipment such as a mask or a pair of gloves, or a wipe.

16. A composition comprising an effective amount of a cucurbituril isomer selected from any one of cucurbit[6]uril, cucurbit[7]uril, cucurbit[8]uril, and mixtures thereof for use in a therapeutic method of disinfecting or preventing infection of a solid surface of one of an enveloped virus, a non-enveloped virus, or a mixture thereof, wherein the solid surface is a human mucous membrane such as found in nasal passages or eyes.

17. A composition according to claim 16 for use in a therapeutic method of disinfecting or preventing infection of a solid
surface of one of an enveloped virus, a non-enveloped virus, or a mixture thereof, wherein the enveloped virus is selected from the group consisting of family Herpesviridae, Poxviridae, Hepadnaviridae, Asfarviridae, Flaviviridae, Togaviridae, Coronaviridae, Orthomyxoviridae, Paramyxoviridae, Rhabdoviridae, Bunyavirales, Filoviridae, Pneumoviridae, and Retroviridae,
or wherein the enveloped virus is selected from the group consisting of genus simplexvirus, varicellovirus, orthopoxvirus, parapoxvirus, yatapoxvirus, molluscipoxvirus, orthohepadnavirus, hepacivirus, flavivirus, betacoronavirus, alphacoronavirus, deltacoronavirus, gammacoronavirus, alphainfluenzavirus, betainfluenzavirus, gammainfluenzavirus, morbillivirus, rubelavirus, lyssavirus, ebolavirus, orthopneumovirus, cytomegalovirus, and lentivirus,
or wherein the enveloped virus is selected from the group consisting of species herpes simplex virus 1, herpes simplex virus 2, varicella zoster virus, modified vaccinia virus Ankara (MVA), hepatitis B virus, hepatitis C virus, West Nile virus, dengue virus, tick-borne encephalitis virus, yellow fever virus, Zika virus, Middle East respiratory syndrome-related coronavirus, Severe acute respiratory syndrome-related coronavirus such as SARS-CoV, SARS-CoV-2 and feline coronavirus (Strain Munich), influenza A virus, influenza B virus, influenza C virus, measles virus, mumps virus, rabies virus, ebola virus, respiratory syncytial virus, cytomegalovirus, HIV-1 virus and HIV-2 virus.

18. A composition according to claim 16 or claim 17 for use in a therapeutic method of disinfecting or preventing infection
of a solid surface of one of an enveloped virus, a non-enveloped virus, or a mixture thereof, wherein the non-enveloped virus is selected from the group consisting of family Picornaviridae, Caliciviridae, Adenoviridae, Reoviridae, Astroviridae, Circoviridae, Parvoviridae, Papillomaviridae and Polyomaviridae,
or wherein the non-enveloped virus is selected from the group consisting of genus enterovirus, rotavirus, norovirus, vesivirus, mastadenovirus, mamastrovirus, cyclovirus, protoparvovirus, alphapolyomavirus, betapolyomavirus, and gammapolyomavirus,
or wherein the non-enveloped virus is selected from the group consisting of species enterovirus A, enterovirus B, enterovirus C, coxsackievirus B4, poliovirus type 1, murine norovirus, feline calicivirus, rhinovirus A, rhinovirus B, rhinovirus C, Norwalk virus, Adenovirus type 5, and any one of rotavirus A to J.

19. A composition according to claim 16 for use in a therapeutic method of disinfecting or preventing infection of a solid surface of one of an enveloped virus, a non-enveloped virus, or a mixture thereof, wherein the composition comprises cucurbit[8]uril, optionally wherein the composition additionally comprises cucurbit[6]uril and cucurbit[7]uril.

## Patentansprüche

1. Nicht therapeutisches Verfahren zum Desinfizieren oder Verhindern einer Infektion einer gasförmigen Umgebung durch, einer Flüssigkeit von oder einer festen Oberfläche von einem von einem behüllten Virus, einem nicht behüllten Virus oder einer Mischung davon, wobei das Verfahren den Schritt eines Behandelns der gasförmigen Umgebung, Flüssigkeit oder festen Oberfläche mit einer Zusammensetzung, die eine wirksame Menge eines Cucurbituril-Isomers, ausgewählt aus einem von Cucurbit[6]uril, Cucurbit[7]uril, Cucurbit[8]uril und Mischungen davon, umfasst, umfasst, oder zum Verhindern einer Infektion einer festen Oberfläche, umfassend den Schritt des Herstellens der festen Oberfläche aus einer Zusammensetzung, die eine wirksame Menge eines Cucurbituril-Isomers, ausgewählt aus einem von Cucurbit[6]uril, Cucurbit[7]uril, Cucurbit[8]uril und Mischungen davon, umfasst.

2. Nicht therapeutisches Verfahren nach Anspruch 1, wobei das behüllte Virus ausgewählt ist aus der Gruppe bestehend aus der Familie Herpesviridae, Poxviridae, Hepadnaviridae, Asfarviridae, Flaviviridae, Togaviridae, Coronaviridae, Orthomyxoviridae, Paramyxoviridae, Rhabdoviridae, Bunyavirales, Filoviridae, Pneumoviridae und Retroviridae,
oder wobei das behüllte Virus ausgewählt ist aus der Gruppe bestehend aus Gattung Simplexvirus, Varicellovirus, Orthopoxvirus, Parapoxvirus, Yatapoxvirus, Molluscipoxvirus, Orthohepadnavirus, Hepacivirus, Flavivirus, Betacoronavirus, Alphacoronavirus, Deltacoronavirus, Gammacoronavirus, Alphainfluenzavirus, Betainfluenzavirus, Gammainfluenzavirus, Morbillivirus, Rubelavirus, Lyssavirus, Ebolavirus, Orthopneumovirus, Cytomegalovirus und Lentivirus,
oder wobei das behüllte Virus ausgewählt ist aus der Gruppe bestehend aus der Spezies Herpes-simplex-Virus 1, Herpes-simplex-Virus 2, Varizella-Zoster-Virus, Modified-Vaccinia-Ankara-Virus (MVA), Hepatitis-B-Virus, Hepatitis-C-Virus, West-Nil-Virus, Dengue-Virus, Zecken-Enzephalitis-Virus, Gelbfiebervirus, Zika-Virus, Coronavirus im Zusammenhang mit dem Mittlerer-Osten-Atemwegssyndrom, Coronavirus im Zusammenhang mit schwerem akutem Atemwegssyndrom wie SARS-CoV, SARS-CoV-2 und felinem Coronavirus (Stamm München), Influenza-A-Virus, Influenza-B-Virus, Influenza-C-Virus, Masernvirus, Mumpsvirus, Tollwutvirus, Ebolavirus, respiratorischem Synzytialvirus, Cytomegalovirus, HIV-1-Virus und HIV-2-Virus.

3. Nicht therapeutisches Verfahren nach Anspruch 1 oder Anspruch 2, wobei das nicht behüllte Virus aus der Gruppe ausgewählt ist, die aus der Familie Picornaviridae, Caliciviridae, Adenoviridae, Reoviridae, Astroviridae, Circoviridae, Parvoviridae, Papillomaviridae und Polyomaviridae besteht,
oder wobei das nicht behüllte Virus aus der Gruppe ausgewählt ist, die aus der Gattung Enterovirus, Rotavirus, Norovirus, Vesivirus, Mastadenovirus, Mamastrovirus, Cyclovirus, Protoparvovirus, Alphapolyomavirus, Betapolyomavirus und Gammapolyomavirus besteht,
oder wobei das nicht behüllte Virus ausgewählt ist aus der Gruppe bestehend aus Spezies Enterovirus A, Enterovirus B, Enterovirus C, Coxsackievirus B4, Poliovirus Typ 1, murinem Norovirus, felinem Calicivirus, Rhinovirus A, Rhinovirus B, Rhinovirus C, Norwalk-Virus, Adenovirus Typ 5 und einem der Rotaviren A bis J.

4. Nicht therapeutisches Verfahren nach Anspruch 1, wobei die Zusammensetzung Cucurbit[7]uril umfasst.

5. Nicht therapeutisches Verfahren nach Anspruch 1, wobei die Zusammensetzung Cucurbit[8]uril umfasst.

6. Nicht therapeutisches Verfahren nach Anspruch 5, wobei die Zusammensetzung zusätzlich Cucurbit[6]uril und Cucurbit[7]uril umfasst.

7. Nicht therapeutisches Verfahren nach einem der vorhergehenden Ansprüche, wobei die Zusammensetzung zusätzlich ein Viruzid umfasst, wobei das Viruzid optional aus der Gruppe ausgewählt ist, die aus Phenoxyethanol, Alkoholen wie Isopropylalkohol, Ethanol und n-Propanol, Bleichmittel auf Chlorbasis, Bleichmittel auf Peroxidbasis, einem Aldehyd wie Formaldehyd, Glutaraldehyd oder ortho-Phthalaldehyd, einer quaternären Ammoniumverbindung wie Benzalkoniumchlorid oder Didecyldimethylammoniumchlorid, einem Chlorhexidin wie Chlorhexidindigluconat und einem Iodophor besteht.

8. Nicht therapeutisches Verfahren nach Anspruch 7, wenn abhängig von Anspruch 5, wobei die Zusammensetzung andere Cucurbituril-Isomere ausschließt und wobei das Gewichtsverhältnis zwischen Phenoxyethanol und Cucurbit[8]uril weniger als 9:1, vorzugsweise weniger als 5, am stärksten bevorzugt weniger als 3 beträgt.

9. Nicht therapeutisches Verfahren nach Anspruch 7, wenn abhängig von Anspruch 6, wobei das Gewichtsverhältnis zwischen Phenoxyethanol und Cucurbit[8]uril mehr als 5:1, vorzugsweise größer als 7:1, am stärksten bevorzugt größer als 9:1 ist.

10. Nicht therapeutisches Verfahren nach einem der vorhergehenden Ansprüche, wobei die wirksame Menge des Cucurbituril-Isomers in dem Bereich von 0,000005-5, 0,00005-2, 0,0005-1, 0,005-1, 0,05-1 Gew./Vol.-% liegt.

11. Nicht therapeutisches Verfahren nach einem der Ansprüche 5 oder 8 und Ansprüche 6 oder 9, wenn von Anspruch 6 abhängig, wobei Cucurbit[8]uril 10-30, vorzugsweise 15-25 Gew./Gew.-% Gesamt-Cucurbiturile umfasst.

12. Nicht therapeutisches Verfahren nach einem der Ansprüche 6 oder 9 und Ansprüche 7 oder 10 bis 11, wenn abhängig von Anspruch 6, wobei ein anderes Cucurbituril als Cucurbit[6]uril, Cucurbit[7]uril, Cucurbit[8]uril weniger als 5, weniger als 1, weniger als 0,5 Gew./Gew.-% Gesamt-Cucurbiturile umfasst, wobei ein anderes Cucurbituril als Cucurbit[6]uril, Cucurbit[7]uril, Cucurbit[8]uril optional mindestens 0,001 oder mindestens 0,01 Gew./Gew.-% Gesamt-Cucurbiturile umfasst, wobei ein anderes Cucurbituril als Cucurbit[6]uril, Cucurbit[7]uril, Cucurbit[8]uril vorzugsweise aus der Gruppe ausgewählt ist, die aus Cucurbit[5]uril, einem beliebigen von Cucurbit[9]uril bis Cucurbit[20]uril besteht.

13. Nicht therapeutisches Verfahren nach einem der vorhergehenden Ansprüche, wobei die Zusammensetzung in Form einer Lösung oder flüssigen Suspension vorliegt, die optional zur Abgabe als Aerosol oder Spray geeignet ist.

14. Nicht therapeutisches Verfahren nach einem der vorhergehenden Ansprüche, wobei die Zusammensetzung in Form einer flüssigen Beschichtung vorliegt und der Schritt des Behandelns der festen Oberfläche Beschichten der festen Oberfläche mit der flüssigen Zusammensetzung ist.

15. Nicht therapeutisches Verfahren nach einem der vorhergehenden Ansprüche, wobei die feste Oberfläche Teil einer Luftfilterpatrone, Teil eines Gegenstands medizinischer persönlicher Schutzausrüstung, wie eine Maske oder ein Paar Handschuhe, oder ein Wischtuch ist.

16. Zusammensetzung, umfassend eine wirksame Menge eines Cucurbituril-Isomers, das aus einem von Cucurbit[6]uril, Cucurbit[7]uril, Cucurbit[8]uril und Mischungen davon ausgewählt ist, zur Verwendung in einem therapeutischen Verfahren zum Desinfizieren oder Verhindern einer Infektion einer festen Oberfläche eines von einem behüllten Virus, einem nicht behüllten Virus oder einer Mischung davon, wobei die feste Oberfläche eine menschliche Schleimhaut ist, wie sie in Nasengängen oder Augen zu finden ist.

17. Zusammensetzung nach Anspruch 16 zur Verwendung in einem therapeutischen Verfahren zum Desinfizieren oder Verhindern einer Infektion einer festen Oberfläche eines von einem behüllten Virus, einem nicht behüllten Virus oder einer Mischung davon, wobei das behüllte Virus ausgewählt ist aus der Gruppe bestehend aus der Familie Herpesviridae, Poxviridae, Hepadnaviridae, Asfarviridae, Flaviviridae, Togaviridae, Coronaviridae, Orthomyxoviridae, Paramyxoviridae, Rhabdoviridae, Bunyavirales, Filoviridae, Pneumoviridae und Retroviridae,
oder wobei das behüllte Virus ausgewählt ist aus der Gruppe bestehend aus Gattung Simplexvirus, Varicellovirus, Orthopoxvirus, Parapoxvirus, Yatapoxvirus, Molluscipoxvirus, Orthohepadnavirus, Hepacivirus, Flavivirus, Betacoronavirus, Alphacoronavirus, Deltacoronavirus, Gammacoronavirus, Alphainfluenzavirus, Betainfluenzavirus, Gammainfluenzavirus, Morbillivirus, Rubelavirus, Lyssavirus, Ebolavirus, Orthopneumovirus, Cytomegalovirus und Lentivirus,
oder wobei das behüllte Virus ausgewählt ist aus der Gruppe bestehend aus der Spezies Herpes-simplex-Virus 1, Herpes-simplex-Virus 2, Varizella-Zoster-Virus, Modified-Vaccinia-Ankara-Virus (MVA), Hepatitis-B-Virus, Hepatitis-C-Virus, West-Nil-Virus, Dengue-Virus, Zecken-Enzephalitis-Virus, Gelbfiebervirus, Zika-Virus, Coronavirus im Zusammenhang mit dem Mittlerer-Osten-Atemwegssyndrom, Coronavirus im Zusammenhang mit schwerem akutem Atemwegssyndrom wie SARS-CoV, SARS-CoV-2 und felinem Coronavirus (Stamm München), Influenza-A-Virus, Influenza-B-Virus, Influenza-C-Virus, Masernvirus, Mumpsvirus, Tollwutvirus, Ebolavirus, respiratorischem Synzytialvirus, Cytomegalovirus, HIV-1-Virus und HIV-2-Virus.

18. Zusammensetzung nach Anspruch 16 oder Anspruch 17 zur Verwendung in einem therapeutischen Verfahren zum Desinfizieren oder Verhindern einer Infektion einer festen Oberfläche eines von einem behüllten Virus, einem nicht behüllten Virus oder einer Mischung davon, wobei das nicht behüllte Virus aus der Gruppe ausgewählt ist, die aus der Familie Picornaviridae, Caliciviridae, Adenoviridae, Reoviridae, Astroviridae, Circoviridae, Parvoviridae, Papillomaviridae und Polyomaviridae besteht,
oder wobei das nicht behüllte Virus aus der Gruppe ausgewählt ist, die aus der Gattung Enterovirus, Rotavirus, Norovirus, Vesivirus, Mastadenovirus, Mamastrovirus, Cyclovirus, Protoparvovirus, Alphapolyomavirus, Betapolyomavirus und Gammapolyomavirus besteht,
oder wobei das nicht behüllte Virus ausgewählt ist aus der Gruppe bestehend aus Spezies Enterovirus A, Enterovirus B, Enterovirus C, Coxsackievirus B4, Poliovirus Typ 1, murinem Norovirus, felinem Calicivirus, Rhinovirus A, Rhinovirus B, Rhinovirus C, Norwalk-Virus, Adenovirus Typ 5 und einem der Rotaviren A bis J.

19. Zusammensetzung nach Anspruch 16 zur Verwendung in einem therapeutischen Verfahren zum Desinfizieren oder Verhindern einer Infektion einer festen Oberfläche eines von einem behüllten Virus, einem nicht behüllten Virus oder einer Mischung davon, wobei die Zusammensetzung Cucurbit[8]uril umfasst, wobei die Zusammensetzung optional zusätzlich Cucurbit[6]uril und Cucurbit[7]uril umfasst.

## Revendications

1. Procédé non thérapeutique de désinfection ou de prévention d'infection d'un environnement gazeux par, un liquide de, ou une surface solide de l'un d'un virus enveloppé, d'un virus non enveloppé ou d'un mélange de ceux-ci, le procédé comprenant l'étape de traitement dudit environnement gazeux, dudit liquide ou de ladite surface solide avec une composition comprenant une quantité efficace d'un isomère de cucurbituril choisi parmi l'un quelconque parmi le cucurbit[6]uril, le cucurbit[7]uril, le cucurbit[8]uril et des mélanges de ceux-ci ou, afin de prévenir l'infection d'une surface solide, comprenant l'étape de production de ladite surface solide à partir d'une composition comprenant une quantité efficace d'un isomère de cucurbituril choisi parmi l'un quelconque parmi le cucurbit[6]uril, le cucurbit[7]uril, le cucurbit[8]uril et des mélanges de ceux-ci.

2. Procédé non thérapeutique selon la revendication 1, dans lequel le virus enveloppé est choisi dans le groupe constitué par la famille des Herpesviridae, Poxviridae, Hepadnaviridae, Asfarviridae, Flaviviridae, Togaviridae, Coronaviridae, Orthomyxoviridae, Paramyxoviridae, Rhabdoviridae, Bunyavirales, Filoviridae, Pneumoviridae et Retroviridae,
ou dans lequel le virus enveloppé est choisi dans le groupe constitué par le genre simplexvirus, varicellovirus, orthopoxvirus, parapoxvirus, yatapoxvirus, molluscipoxvirus, orthohepadnavirus, hépacivirus, flavivirus, betacoronavirus, alphacoronavirus, deltacoronavirus, gammacoronavirus, alphainfluenzavirus, betainfluenzavirus, gammainfluenzavirus, morbillivirus, rubelavirus, lyssavirus, ebolavirus, orthopneumovirus, cytomégalovirus et lentivirus,
ou dans lequel le virus enveloppé est choisi dans le groupe constitué par le virus de l'herpès simplex de l'espèce 1, le virus de l'herpès simplex de l'espèce 2, le virus de la varicelle et du zona, le virus de la vaccine modifié Ankara (MVA), le virus de l'hépatite B, le virus de l'hépatite C, le virus du Nil Occidental, le virus de la dengue, le virus de l'encéphalite à tiques, le virus de la fièvre jaune, le virus Zika, le coronavirus lié au syndrome respiratoire du Moyen-Orient, le coronavirus lié au syndrome respiratoire aigu sévère tel que le SARS-CoV, le SARS-CoV-2 et le coronavirus félin (souche Munich), le virus de la grippe A, le virus de la grippe B, le virus de la grippe C, le virus de la rougeole, le virus des oreillons, le virus de la rage, le virus Ebola, le virus respiratoire syncytial, le cytomégalovirus, le virus VIH-1 et le virus VIH-2.

3. Procédé non thérapeutique selon la revendication 1 ou la revendication 2, dans lequel le virus non enveloppé est choisi dans le groupe constitué par la famille des Picornaviridae, Caliciviridae, Adenoviridae, Reoviridae, Astroviridae, Circoviridae, Parvoviridae, Papillomaviridae et Polyomaviridae,
ou dans lequel le virus non enveloppé est choisi dans le groupe constitué par le genre entérovirus, rotavirus, norovirus, vésivirus, mastadénovirus, mamastrovirus, cyclovirus, protoparvovirus, alphapolyomavirus, bétapolyomavirus et gammapolyomavirus,
ou dans lequel le virus non enveloppé est choisi dans le groupe constitué par les espèces entérovirus A, entérovirus B, entérovirus C, coxsackievirus B4, poliovirus de type 1, norovirus murin, calicivirus félin, rhinovirus A, rhinovirus B, rhinovirus C, virus Norwalk, adénovirus de type 5 et l'un quelconque des rotavirus A à J.

4. Procédé non thérapeutique selon la revendication 1, dans lequel la composition comprend le cucurbit[7]uril.

5. Procédé non thérapeutique selon la revendication 1, dans lequel la composition comprend le cucurbit[8]uril.

6. Procédé non thérapeutique selon la revendication 5, dans lequel la composition comprend en outre le cucurbit[6]uril et le cucurbit[7]uril.

7. Procédé non thérapeutique selon l'une quelconque des revendications précédentes, dans lequel la composition comprend en outre un virucide, éventuellement dans lequel le virucide est choisi dans le groupe constitué par le phénoxyéthanol, les alcools tels que l'alcool isopropylique, l'éthanol et le n-propanol, un agent de blanchiment à base de chlore, un agent de blanchiment à base de peroxyde, un aldéhyde tel que le formaldéhyde, le glutaraldéhyde ou l'orthophtalaldéhyde, un composé d'ammonium quaternaire tel que le chlorure de bénzalkonium ou le chlorure de didécyldiméthylammonium, une chlorhexidine telle que le digluconate de chlorhexidine, et un iodophore.

8. Procédé non thérapeutique selon la revendication 7 lorsqu'elle dépend de la revendication 5, dans lequel la composition exclut d'autres isomères de cucurbituril, et dans lequel le rapport pondéral entre le phénoxyéthanol et le cucurbit[8]uril est inférieur à 9:1, de préférence inférieur à 5, le plus préférablement inférieur à 3.

9. Procédé non thérapeutique selon la revendication 7 lorsqu'elle dépend de la revendication 6, dans lequel le rapport pondéral entre le phénoxyéthanol et le cucurbit[8]uril est supérieur à 5:1, de préférence supérieur à 7:1, le plus préférablement supérieur à 9:1.

10. Procédé non thérapeutique selon l'une quelconque des revendications précédentes, dans lequel la quantité efficace de l'isomère de cucurbituril est comprise dans la plage de 0,000005 à 5, de 0,00005 à 2, de 0,0005 à 1, de 0,005 à 1, de 0,05 à 1 % p/v.

11. Procédé non thérapeutique selon l'une quelconque des revendications 5 ou 8 et des revendications 6 ou 9 lorsqu'elles dépendent de la revendication 6, dans lequel le cucurbit[8]uril comprend 10 à 30, de préférence 15 à 25 % p/p de cucurbiturils totaux.

12. Procédé non thérapeutique selon l'une quelconque des revendications 6 ou 9 et des revendications 7 ou 10 à 11 lorsqu'elles dépendent de la revendication 6, dans lequel le cucurbituril autre que le cucurbit[6]uril, le cucurbit[7]uril, le cucurbit[8]uril comprend moins de 5, moins de 1, moins de 0,5 % p/p de cucurbiturils totaux, éventuellement dans lequel le cucurbituril autre que le cucurbit[6]uril, le cucurbit[7]uril, le cucurbit[8]uril comprend au moins 0,001 ou au moins 0,01 % p/p de cucurbiturils totaux, dans lequel le cucurbituril autre que le cucurbit[6]uril, le cucurbit[7]uril, le cucurbit[8]uril est de préférence choisi dans le groupe constitué par le cucurbit[5]uril, l'un quelconque du cucurbit[9]uril au cucurbit[20]uril.

13. Procédé non thérapeutique selon l'une quelconque des revendications précédentes, dans lequel la composition se présente sous la forme d'une solution ou d'une suspension liquide, éventuellement adaptée à la distribution sous forme d'aérosol ou de spray.

14. Procédé non thérapeutique selon l'une quelconque des revendications précédentes, dans lequel la composition est sous la forme d'un revêtement liquide et l'étape de traitement de la surface solide consiste à revêtir la surface solide avec la composition liquide.

15. Procédé non thérapeutique selon l'une quelconque des revendications précédentes, dans lequel la surface solide fait partie d'une cartouche de filtre à air, fait partie d'un élément d'équipement de protection individuelle médical tel qu'un masque ou une paire de gants, ou d'une lingette.

16. Composition comprenant une quantité efficace d'un isomère de cucurbituril choisi parmi l'un quelconque parmi le cucurbit[6]uril, le cucurbit[7]uril, le cucurbit[8]uril et des mélanges de ceux-ci, destinée à être utilisée dans un procédé thérapeutique de désinfection ou de prévention d'infection d'une surface solide de l'un parmi un virus enveloppé, un virus non enveloppé ou un mélange de ceux-ci, dans laquelle la surface solide est une membrane muqueuse humaine telle que trouvée dans les voies nasales ou les yeux.

17. Composition selon la revendication 16, destinée à être utilisée dans un procédé thérapeutique de désinfection ou de prévention d'une infection d'une surface solide de l'un parmi un virus enveloppé, un virus non enveloppé ou un mélange de ceux-ci, dans laquelle le virus enveloppé est choisi dans le groupe constitué par la famille des Herpesviridae, Poxviridae, Hepadnaviridae, Asfarviridae, Flaviviridae, Togaviridae, Coronaviridae, Orthomyxoviridae, Paramyxoviridae, Rhabdoviridae, Bunyavirales, Filoviridae, Pneumoviridae et Retroviridae, ou dans laquelle le virus enveloppé est choisi dans le groupe constitué par le genre simplexvirus, varicellovirus, orthopoxvirus, parapoxvirus, yatapoxvirus, molluscipoxvirus, orthohepadnavirus, hépacivirus, flavivirus, betacoronavirus, alphacoronavirus, deltacoronavirus, gammacoronavirus, alphainfluenzavirus, betainfluenzavirus, gammainfluenzavirus, morbillivirus, rubelavirus, lyssavirus, ebolavirus, orthopneumovirus, cytomegalovirus, et lentivirus,
ou dans lequel le virus enveloppé est choisi dans le groupe constitué par le virus de l'herpès simplex de l'espèce 1, le virus de l'herpès simplex de l'espèce 2, le virus de la varicelle et du zona, le virus de la vaccine modifié Ankara (MVA), le virus de l'hépatite B, le virus de l'hépatite C, le virus du Nil Occidental, le virus de la dengue, le virus de l'encéphalite à tiques, le virus de la fièvre jaune, le virus Zika, le coronavirus lié au syndrome respiratoire du Moyen-Orient, le coronavirus lié au syndrome respiratoire aigu sévère tel que le SARS-CoV, le SARS-CoV-2 et le coronavirus félin (souche Munich), le virus de la grippe A, le virus de la grippe B, le virus de la grippe C, le virus de la rougeole, le virus des oreillons, le virus de la rage, le virus Ebola, le virus respiratoire syncytial, le cytomégalovirus, le virus VIH-1 et le virus VIH-2.

18. Composition selon la revendication 16 ou la revendication 17, destinée à être utilisée dans un procédé thérapeutique de désinfection ou de prévention d'infection d'une surface solide de l'un d'un virus enveloppé, d'un virus non enveloppé ou d'un mélange de ceux-ci, dans laquelle le virus non enveloppé est choisi dans le groupe constitué par la famille des Picornaviridae, Caliciviridae, Adenoviridae, Reoviridae, Astroviridae, Circoviridae, Parvoviridae, Papillomaviridae et Polyomaviridae,
ou dans laquelle le virus non enveloppé est choisi dans le groupe constitué par le genre entérovirus, rotavirus, norovirus, vésivirus, mastadénovirus, mamastrovirus, cyclovirus, protoparvovirus, alphapolyomavirus, bétapolyomavirus et gammapolyomavirus,
ou dans laquelle le virus non enveloppé est choisi dans le groupe constitué par les espèces entérovirus A, entérovirus B, entérovirus C, coxsackievirus B4, poliovirus de type 1, norovirus murin, calicivirus félin, rhinovirus A, rhinovirus B, rhinovirus C, virus Norwalk, adénovirus de type 5 et l'un quelconque des rotavirus A à J.

19. Composition selon la revendication 16, destinée à être utilisée dans un procédé thérapeutique de désinfection ou de prévention d'infection d'une surface solide de l'un d'un virus enveloppé, d'un virus non enveloppé ou d'un mélange de ceux-ci, dans laquelle la composition comprend le cucurbit[8]uril, facultativement dans laquelle la composition comprend en outre le cucurbit[6]uril et le cucurbit[7]uril.
